# EUROPÄISCHE PATENTSCHRIFT

(11) **EP 3 248 849 B1**
(45) Veröffentlichungstag und Bekanntmachung des Hinweises auf die Patenterteilung: **12.12.2018**
(21) Anmeldenummer: 17000392.5
(22) Anmeldetag: 10.03.2017
(51) Int. Cl.: B60T 13/26

(54) **PARK-LÖSE-VENTIL FÜR EIN ANHÄNGEFAHRZEUG**
PARK RELEASE VALVE FOR A TRAILER VEHICLE
CLAPET DESTINÉ À RELÂCHER LE FREIN DE STATIONNEMENT D'UNE REMORQUE

(30) Priorität: 07.05.2016 DE 102016005625
(43) Veröffentlichungstag der Anmeldung: 29.11.2017
(73) Patentinhaber: WABCO GmbH, 30432 Hannover (DE)
(72) Erfinder: Sieker, Armin, 33611 Bielefeld (DE); Stender, Axel, 31787 Hameln (DE); Witte, Norbert, 31867 Lauenau (DE)

(56) Entgegenhaltungen:
- EP-A1- 2 426 021
- EP-A1- 3 228 512
- EP-B1- 1 386 810
- DE-A1- 19 818 982

## Beschreibung

Die Erfindung betrifft ein Park-Löse-Ventil für ein Anhängefahrzeug mit pneumatischer Bremsanlage und insbesondere zur Steuerung des Drucks in Federspeicher-Bremszylindern. Außerdem betrifft die Erfindung eine Ventilanordnung, eine pneumatische Bremsanlage und ein Anhängefahrzeug.

Die pneumatische Bremsanlage eines Anhängefahrzeugs wird typischerweise über zwei pneumatische Leitungen mit einem Zugfahrzeug verbunden. Eine Leitung führt Steuerdruck über einen Steueranschluss zum Anhängefahrzeug. Dieser Anschluss wird auch als "Bremse" bezeichnet. Die andere Leitung führt Vorratsdruck über einen als "Vorrat" bezeichneten Versorgungsanschluss zum Anhängefahrzeug.

Integriert ist eine Sicherheitsfunktion bei Abriss der Leitung für den Vorratsdruck. Hierzu wird der Druck in der Leitung überwacht. Bei zu großem Druckabfall wird das Anhängefahrzeug automatisch durch Federspeicherbremsen eingebremst.

Das Anhängefahrzeug weist einen Vorratsbehälter für Druckluft auf, der über den Versorgungsanschluss gespeist wird. Dadurch kann das Anhängefahrzeug über seine Betriebsbremsen mehrfach kurz hintereinander gebremst werden, ohne dass die hierfür erforderliche Druckluft zeitgleich über den Versorgungsanschluss zugeführt werden muss.

Moderne pneumatische Bremsanlagen weisen kombinierte Bremszylinder auf, nämlich mit Membran-Betriebsbremszylinder und Federspeicher-Bremszylinder in einer gemeinsamen Baugruppe. Dies hat den Vorteil, dass Bremskolben, Bremshebel und Bremsscheiben oder Bremstrommeln nur einmal je Baugruppe vorhanden sein müssen. Lediglich Federspeicher-Bremszylinder und Betriebsbremszylinder sind nebeneinander je Baugruppe vorhanden. Derartige kombinierte Bremszylinder werden auch als Tristop-Zylinder bezeichnet. Möglich ist aber auch eine getrennte Anordnung von Betriebsbremsen und Federspeicherbremsen.

In einem abgestellten und vom Zugfahrzeug getrennten Anhängefahrzeug sind die Federspeicherbremsen aktiviert, da die Federspeicher-Bremszylinder entlüftet sind. Zum Rangieren des Anhängefahrzeugs ist ein Lösen der Federspeicherbremsen erforderlich. Hierfür ist ein spezielles Park-Löse-Ventil vorgesehen, welches in einer Lösestellung die Federspeicher-Bremszylinder mit Druckluft aus dem Vorratsbehälter (des Anhängefahrzeugs) belüftet und so löst.

Nach Beendigung des Rangierens müssen die Federspeicher-Bremszylinder wieder entlüftet werden. Hierzu kann das Park-Löse-Ventil eine Parkstellung einnehmen.

In der Praxis kann das Park-Löse-Ventil aus zwei getrennt voneinander bedienbaren Ventileinheiten bestehen. Kompakter ist ein Ventil, in dem die beschreibenden Funktionalitäten soweit wie möglich zusammengefasst sind.

In der EP 1 386 810 B1 ist ein Kombiventil mit federnd aufgehängtem Doppelventilkörper offenbart. Eine Steuerstange ist zwischen drei Stellungen, Fahren- Parken- Rangieren, axial verschiebbar und durch eine Schiebehülse verriegelbar. Der Aufbau ist kompakt aber sehr komplex.

Die Federspeicher-Bremszylinder werden je nach Betriebsfall aus dem Vorratsdruck (über den Versorgungsanschluss) oder aus dem Vorratsbehälter des Anhängefahrzeugs gespeist. Eine Trennung der Leitungen für den Vorratsbehälter einerseits und für den Vorratsdruck andererseits ist deshalb sinnvoll.

EP 3 228 512 A1 offenbart ein Park-Löse-Ventil für ein Anhängefahrzeug mit pneumatischer Bremsanlage und zur Steuerung des Drucks in Federspeicher-Bremszylindern. Vorgesehen sind ein äußerer Steuerkolben, ein innerer Steuerkolben, ein Anschluß für Vorratsdruck, ein Anschluß für Vorratsbehälterdruck, ein Anschluß für Entlüftung und ein Anschluß als Druckausgang. Der äußere Steuerkolben ist zwischen drei Stellungen bewegbar, einer Lösestellung, einer Fahrtstellung und einer Parkstellung. In Fahrtstellung ist der innere Steuerkolben mit Vorratsdruck beaufschalgt und drückt gegen den äußeren Steuerkolben, derart, dass der äußere Steuerkolben in seiner Bewegung eingeschränkt ist und keine Lösestellung annehmen kann.

Aufgabe der vorliegenden Erfindung ist die Schaffung eines (anderen) Park-Löse-Ventils kompakter Bauart und hoher Funktionalität. Vorteilhafterweise ist das Ventil so aufgebaut, dass mit nur geringem Aufwand eine Zusatzfunktion integriert werden kann. Verhindert werden soll ein unbeabsichtigtes Lösen der Federspeicherbremsen beim Übergang in eine Fahrtstellung. Vorzugsweise soll auch ein ungewollter Druckausgleich zwischen dem Anschluss für Vorratsdruck und dem Anschluss für Vorratsbehälterdruck vermieden werden.

Zur Lösung der Aufgabe weist das erfindungsgemäße Park-Löse-Ventil die Merkmale des Anspruchs 1 auf, wie folgt:
a) ein Steuerkolben und ein Kolbenschieber,
b)
   - ein Anschluss für Vorratsdruck,
   - ein Anschluss für Vorratsbehälterdruck,
   - ein Ausgang für Entlüftung,
   - ein Anschluss als Druckausgang,
c) der Steuerkolben ist zumindest zwischen drei voneinander verschiedenen Stellungen bewegbar:
   - einer Lösestellung, dabei ist der Anschluss für Vorratsbehälterdruck mit dem Anschluss als Druckausgang verbunden,
   - einer Fahrtstellung, dabei ist der Anschluss für Vorratsdruck mit dem Anschluss als Druckausgang oder mit dem Anschluss für Vorratsbehälterdruck und dem Anschluss als Druckausgang verbunden,
   - einer Parkstellung, dabei ist der Anschluss als Druckausgang mit dem Ausgang für Entlüftung verbunden,
d) in Fahrtstellung ist der Kolbenschieber mit Vorratsdruck beaufschlagt und drückt gegen den Steuerkolben, derart, dass der Steuerkolben in seiner Bewegung eingeschränkt ist und keine Lösestellung annehmen kann.

Der Aufbau des Ventils ist relativ kompakt. Die drei Stellungen sind durch Bewegung des Steuerkolbens einstellbar. Der Kolbenschieber sichert die Position des Steuerkolbens in Fahrtstellung, so dass der Steuerkolben für eine Bewegung in die Lösestellung (für einen Rangierbetrieb) den auf den Kolbenschieber wirkenden Vorratsdruck überwinden müsste. Zur Sicherung von Fahrtstellung Parkstellung des Steuerkolbens können federbelastete Rasten vorgesehen sein.

Nach einem weiteren Gedanken der Erfindung sind Steuerkolben und Kolbenschieber hohl und auf einem gemeinsamen Träger koaxial hintereinander angeordnet und axial verschiebbar. Zusätzliche Elemente für die Lagerung des Kolbenschiebers können dadurch entfallen. Steuerkolben und Kolbenschieber können auch in einem gemeinsamen Zylinder bewegbar sein. Dabei kann der Zylinder gestuft ausgebildet sein mit unterschiedlichen Querschnitten für den Steuerkolben einerseits und den Kolbenschieber andererseits.

Nach einem weiteren Gedanken der Erfindung weist das Ventil zusätzlich folgende Merkmale auf:
a) in einem Zylinder ist ein Innenzylinder angeordnet und bildet dabei einen Ringraum zwischen Zylinder und Innenzylinder,
b) der Steuerkolben ist hohl ausgebildet,
c) der Steuerkolben ist auf dem Zylinder und dabei zugleich im Ringraum axial bewegbar,
d) der Kolbenschieber ist nach Art einer Hülse axial beidseitig offen ausgebildet, auf dem Innenzylinder axial bewegbar und trennt einen Druckraum des Ringraums von einem Entlüftungsraum des Ringraums,
e) der Zylinder weit im Bereich des Entlüftungsraums eine Entlüftungsöffnung auf,
f) der Druckraum ist mit dem Anschluss für Vorratsdruck verbunden.

Der Druckraum nimmt vorzugsweise den Kolbenschieber auf und weist insbesondere einen etwas größeren wirksamen Querschnitt bzw. Außendurchmesser auf als der Ringraum im Übrigen. Der Innenzylinder ist Träger für Steuerkolben und Kolbenschieber und relativ zum Zylinder fest stehend. Nur Steuerkolben und Kolbenschieber sind relativ zum Innenzylinder bewegbar. Die Entlüftungsöffnung gleicht Druckänderungen im Ringraum bei Bewegung des Kolbenschiebers aus.

Nach einem weiteren Gedanken der Erfindung weist das Ventil zusätzlich folgende Merkmale auf:
a) der Steuerkolben überdeckt den Innenzylinder in axialer Richtung zumindest teilweise,
b) der Steuerkolben weist drei außen umlaufende Dichtungen zum Zylinder auf, zur Bildung von vier Außenzonen, nämlich
   - einer ersten Außenzone als Entlüftungsraum und mit der Entlüftungsöffnung,
   - einer zweiten Außenzone, die je nach Stand des Steuerkolbens mit dem Anschluss als Druckausgang verbunden sein kann,
   - einer dritten Außenzone in Verbindung mit dem Anschluss für Vorratsbehälterdruck und die je nach Stand des Steuerkolbens mit dem Anschluss als Druckausgang verbunden sein kann,
   - und einer insbesondere drucklosen vierten Außenzone,
c) der Steuerkolben weist an einer dem Kolbenschieber abgewandten Seite, im Bereich eines Kopfraums, den Ausgang für Entlüftung auf,
d) der Steuerkolben weist im Bereich der zweiten Außenzone eine Öffnung auf, die je nach Position des Steuerkolbens in eine mit dem Kopfraum verbundene erste Innenzone oder eine hierzu benachbarte zweite Innenzone mündet,
e) in Parkstellung mündet die Öffnung in die erste Innenzone, derart, dass eine Verbindung vom Ausgang für Entlüftung, über den Kopfraum, die erste Innenzone und die zweite Außenzone zum Anschluss als Druckausgang besteht.

Positionen und Anordnung der umlaufenden Dichtungen und der Öffnung sind zur Bildung der Außenzonen außerhalb des Steuerkolbens und der Innenzonen innerhalb des Steuerkolbens aufeinander abgestimmt.

Nach einem weiteren Gedanken der Erfindung weist das Ventil zusätzlich folgende Merkmale auf:
a) der Innenzylinder weist mehrere außen umlaufende Dichtungen auf, zur Bildung mehrerer Innenzonen, wobei der Innenzylinder im Bereich einer zweiten Innenzone mit einer Öffnung in einen Innenraum versehen ist,
b) der Anschluss für Vorratsdruck ist mit dem Innenraum des Innenzylinders verbunden.

Die Position der Öffnung zum Innenraum des Innenzylinders ist mit der Position der Öffnung im Steuerkolben abgestimmt, so dass in Fahrtstellung eine Verbindung vom Anschluss für Vorratsdruck durch die beiden Öffnungen zum Anschluss als Druckausgang möglich ist.

Nach einem weiteren Gedanken der Erfindung weist der Kolbenschieber einen größeren Wirkungsquerschnitt auf als der Steuerkolben, wobei hierzu insbesondere der Zylinder im Bereich des Kolbenschiebers einen größeren Innenquerschnitt (eine größere Zylinderbohrung) aufweist als im Bereich des Steuerkolbens. Auf den Kolbenschieber wirkender Druck wirkt sich dadurch stärker aus als der gleiche Druck auf den Steuerkolben.

Nach einem weiteren Gedanken der Erfindung weist der Steuerkolben im Bereich eines Kolbenkopfes, insbesondere einer Stirnseite den Ausgang für Entlüftung auf, wobei an den Kolbenkopf ein Betätigungsorgan anschließt, welches einen Entlüftungskanal als Teil des Ausgangs für Entlüftung aufweist. Das Betätigungsorgan kann auch integrierter Bestandteil des Steuerkolbens sein bzw. eine axiale Fortsetzung desselben.

Nach einem weiteren Gedanken der Erfindung weist der Innenzylinder im Bereich einer Kopfwandung, insbesondere einer Stirnseite eine axiale Bohrung auf, welche durch ein Verschlussorgan verschließbar ist. Die wahlweise verschließbare Bohrung ermöglicht eine Erweiterung der Funktionalität des Ventils.

Nach einem weiteren Gedanken der Erfindung ist der Steuerkolben in Fahrtstellung so ausgerichtet, dass am Anschluss für Vorratsdruck anliegender Druck durch die Öffnung im Innenzylinder, die zweite Innenzone, die Öffnung im Steuerkolben und die zweite Außenzone zum Anschluss als Druckausgang gelangt.

Nach einem weiteren Gedanken der Erfindung ist in Parkstellung der Steuerkolben so ausgerichtet, dass der Anschluss als Druckausgang durch die zweite Außenzone, die Öffnung im Steuerkolben, die erste Innenzone und den Kopfraum mit einem Entlüftungskanal des Ausgangs für Entlüftung verbunden ist. Vorzugsweise ist der Steuerkolben in Lösestellung (für Rangierbetrieb) so ausgerichtet, dass der Anschluss für Vorratsbehälterdruck über die dritte Außenzone mit dem Anschluss als Druckausgang verbunden ist.

Nach einem weiteren Gedanken der Erfindung sind der Anschluss für Vorratsdruck und der Anschluss für Vorratsbehälterdruck über ein Rückschlagventil miteinander verbunden, derart, dass eine Luftströmung zum Anschluss für Vorratsdruck gesperrt ist. Vorzugsweise in das Park-Löse-Ventil integriert ist somit ein Schutz gegen das Abströmen von Druckluft aus dem Vorratsbehälter in einen im Fehlerfall nur verringerten Vorratsdruck führenden Bereich des Ventils. Vorteilhafterweise ist das Rückschlagventil in eine Wandung des Zylinders integriert.

Nach einem weiteren Gedanken der Erfindung ist der Innenzylinder bodenseitig mit einem außen umlaufenden Rand versehen, wobei der Rand einen mit dem Druckraum verbundenen ersten Kanal und einen mittelbar zum Anschluss für Vorratsbehälterdruck führenden zweiten Kanal aufweist. Der zweite Kanal ist vorzugsweise mit einem Eingang für das Rückschlagventil verbunden.

Nach einem weiteren Gedanken der Erfindung ist der Innenraum des Innenzylinders durch ein Bodenteil abgedeckt, wobei sich das Bodenteil zumindest teilweise auch über dem umlaufenden Rand des Innenzylinders erstreckt, und wobei im Bodenteil ein dritter Kanal vorgesehen ist, mit Verbindung zum Anschluss für Vorratsdruck, mit Abzweig zum ersten Kanal, mit Abzweig zum zweiten Kanal und mit Abzweig zum Innenraum des Innenzylinders.

Nach einem weiteren Gedanken der Erfindung ist der umlaufende Rand des Innenzylinders zwischen einer Wandung des Zylinders und dem Bodenteil gehalten.

Ein zumindest zwischen einer Druck-Sperrstellung und einer Druck-Durchlassstellung bewegbarer Sperrschieber ist in der Erfindung vorgesehen, wobei in Druck-Sperrstellung eine Verbindung vom Anschluss für Vorratsdruck zum Anschluss als Druckausgang gesperrt ist, und wobei vorzugsweise ein Steuerschieber zum Beaufschlagen des Sperrschiebers in Abhängigkeit von einem an einem Anschluss für Bremsdruck anliegenden Bremsdruck vorgesehen ist, derart, dass der Steuerschieber den Sperrschieber in Druck-Durchlassstellung bewegt und/oder dort hält, wenn am Anschluss für Bremsdruck ein Bremsdruck oberhalb eines Grenzwerts anliegt. Dadurch ergibt sich eine zusätzliche Sicherheitsfunktion des Ventils für den Fall eines noch nicht angekoppelten Anhängefahrzeugs mit in Fahrtstellung stehendem Steuerkolben. Wenn nämlich irrtümlich zunächst die Vorratsdruckleitung des Anhängefahrzeugs mit dem Zugfahrzeug verbunden wird, werden ohne die zusätzliche Sicherheitsfunktion die Federspeicherbremsen belüftet und dadurch gelöst. Das Anhängefahrzeug kann sich bewegen, obwohl dies zu diesem Zeitpunkt nicht gewünscht ist und Gefahr für Bedienungspersonen besteht. Mit der Wirkung des Steuerschiebers auf den Sperrschieber wird erreicht, dass trotz Fahrtstellung des Steuerkolbens ohne zusätzliche Maßnahmen kein Druck zu den Federspeicherbremsen gelangt. Vielmehr muss zunächst wenigstens einmal die Betriebsbremse betätigt werden. Dadurch wird der Steuerschieber beaufschlagt, so dass der Sperrschieber in seine Druck-Durchlassstellung fährt und erst dann die Federspeicherbremsen mit dem Vorratsdruck belüftet werden. Die drei voneinander verschiedenen Stellungen des Steuerkolbens werden somit ergänzt durch zwei verschiedene Stellungen des Sperrschiebers, wobei sich diese beiden verschiedenen Stellungen des Sperrschiebers insbesondere in der Fahrtstellung des Steuerkolbens auswirken.

Nach einem weiteren Gedanken der Erfindung ist der Sperrschieber in einem Innenzylinder axial bewegbar zwischen einer Entlüftungs-Sperrstellung und einer Entlüftungs-Durchlassstellung, wobei der Innenzylinder eine Entlüftungsöffnung aufweist, und wobei der Sperrschieber in Entlüftungs-Sperrstellung die Entlüftungsöffnung verschließt und in Entlüftungs-Durchlassstellung offen hält. Der Sperrschieber wirkt somit als Verschlussorgan für die Entlüftungsöffnung. Bei offener Entlüftungsöffnung und passender Stellung des Steuerkolbens können die Federspeicherbremsen entlüftet werden bzw. bleiben weiterhin entlüftet.

Nach einem weiteren Gedanken der Erfindung ist die Druck-Durchlassstellung des Sperrschiebers zugleich dessen Entlüftungs-Sperrstellung. Alternativ oder zusätzlich ist die Druck-Sperrstellung zugleich die Entlüftungs-Durchlassstellung. Vorzugsweise hat der Sperrschieber somit eine Doppelfunktion.

Nach einem weiteren Gedanken der Erfindung ist die Entlüftungsöffnung des Innenzylinders einem Kopfraum zwischen Steuerkolben und Innenzylinder zugewandt, wobei der Sperrschieber zumindest nahe der Entlüftungsöffnung des Innenzylinders einen zumindest teilweise reduzierten Querschnitt aufweist, zur Bildung eines Raumes zwischen Innenzylinder und Sperrschieber. Der Raum dient als Verbindung zwischen Entlüftungsöffnung des Innenzylinders und einer seitlichen Öffnung im Innenzylinder zur Innenzone zwischen Innenzylinder und Steuerkolben. Vorzugsweise ist der Raum zwischen Innenzylinder und Sperrschieber als Ringraum ausgebildet.

Nach einem weiteren Gedanken der Erfindung ist der Sperrschieber durch eine Rückstellfeder in Richtung auf die Druck-Sperrstellung beaufschlagt. Vorteilhafterweise ist die Rückstellfeder im Raum zwischen Innenzylinder und Sperrschieber vorgesehen, etwa koaxial zum Sperrschieber.

Nach einem weiteren Gedanken der Erfindung ist der Steuerschieber in einer Ausnehmung in einem Bodenteil des Ventils angeordnet, unterhalb des Innenzylinders. Innenzylinder und Zylinder sind dadurch konstruktiv einfacher.

Nach einem weiteren Gedanken der Erfindung weist der Sperrschieber an einem dem Steuerschieber zugewandten Ende einen vorzugsweise umlaufenden Kragen auf, wobei der Kragen in einer Ausnehmung in einem Bodenteil des Park-Löse-Ventils angeordnet ist, die Ausnehmung zur Aufnahme des Kragens eine Querschnittsverbreiterung aufweist, die Querschnittsverbreiterung eine Verbindung zum Vorratsdruck aufweist, und der Kragen in Druck-Sperrstellung des Sperrschiebers die Verbindung zum Vorratsdruck verschließt. Die Verbindung zum Vorratsdruck kann durch eine Leitung oder einen Kanal vorgesehen sein, die zum Anschluss für den Vorratsdruck führen.

Nach einem weiteren Gedanken der Erfindung weist der Sperrschieber einen Sperrschieberkanal auf, zur Verbindung von der Ausnehmung zu einem Raum zwischen Sperrschieber und Innenzylinder. Der Raum ist ein Übergang zu einer seitlichen Öffnung im Innenzylinder. Insbesondere ist der Raum als Ringraum ausgebildet.

Nach einem weiteren Gedanken der Erfindung weist der Steuerschieber einen Steuerschieberkanal auf, zur Verbindung vom Sperrschieberkanal zum Vorratsdruck. Die Verbindung zum Vorratsdruck erfolgt insbesondere mit einer Leitung oder einem Kanal, welche von der Querschnittsverbreiterung der Ausnehmung zum Anschluss für Vorratsdruck führen.

Nach einem weiteren Gedanken der Erfindung ist das Gehäuse zumindest dreiteilig vorgesehen, nämlich mit einem Hauptteil, in dem der Zylinder ausgebildet ist, mit einem Mittelteil, in dem der Innenzylinder ausgebildet ist, und mit einem Bodenteil, welcher den Anschluss für Vorratsdruck aufweist und einen Abzweig in den Innenzylinder. Die mehrteilige Ausbildung des Gehäuses ermöglicht einen einfachen Aufbau des Ventils insgesamt.

Nach einem weiteren Gedanken der Erfindung ist ein radial umlaufender Rand des Mittelteils zwischen dem Hauptteil und dem Bodenteil gehalten. Diese Maßnahme erleichtert die Verbindung aller drei Teile des Gehäuses. Vorzugsweise ist der radial umlaufende Rand des Mittelteils zugleich radial umlaufender Rand des Innenzylinders.

Erfindungsgemäß ist der Anschluss als Druckausgang mittelbar oder unmittelbar mit Federspeicher-Bremszylindern verbindbar ist.

Gegenstand der Erfindung ist auch eine Ventilanordnung für ein Anhängefahrzeug, mit einem Park-Löse-Ventil, wie voranstehend dargestellt, und mit einer (weiteren) Ventilanordnung, welche als Notbremsventil vorgesehen ist, wobei ein Anschluss als Druckausgang des Park-Löse-Ventils mit einem Steuereingang der als Notbremsventil vorgesehenen Ventilanordnung verbunden ist. Der Druckausgang des Park-Löse-Ventils speist in diesem Fall nicht unmittelbar die Federspeicherbremszylinder, sondern steuert die Funktion des Notbremsventils. Letzteres lässt bei entsprechender Stellung und anliegendem Druck Druckluft in die Federspeicher-Bremszylinder strömen. Daneben hat das Notbremsventil die Aufgabe, bei übermäßigem Rückgang des Vorratsdrucks (Abrissfunktion) die Federspeicher-Bremszylinder zu entlüften. Vorzugsweise ist das Notbremsventil zusätzlich mit einem Überlastschutz versehen. Dadurch wird sichergestellt, dass die Federspeicher-Bremszylinder belüftet werden, wenn die Betriebsbremse aktiviert wird.

Nach einem weiteren Gedanken der Erfindung kann die als Notbremsventil vorgesehene Ventilanordnung einen Anschluss als Druckausgang, einen Anschluss für Vorratsbehälterdruck und einen Anschluss für Entlüftung aufweisen, wobei je nach Schaltstellung der Anschluss als Druckausgang mit dem Anschluss für Vorratsbehälterdruck oder mit dem Anschluss für Entlüftung verbindbar ist.

Gegenstand der Erfindung ist auch eine pneumatische Bremsanlage mit einer Ventilanordnung oder einem Park-Löse-Ventil, wie voranstehend beschrieben.

Schließlich ist Gegenstand der Erfindung auch ein Anhängefahrzeug mit einer pneumatischen Bremsanlage, wie zuvor genannt.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
Fig. 1 eine pneumatische Bremsanlage eines Anhängefahrzeugs mit Notbremsventil und Park-Löse-Ventil in Fahrtstellung,
Fig. 2 einen Ausschnitt aus Figur 1, nämlich das Park-Löse-Ventil in Fahrtstellung,
Fig. 3 das Park-Löse-Ventil gemäß Fig. 2, im Schnitt entlang einer axial gerichteten Ebene, in Parkstellung,
Fig. 4 das Park-Löse-Ventil gemäß Fig. 3 in Lösestellung,
Fig. 5 das Park-Löse-Ventil gemäß Fig. 3 in Fahrtstellung,
Fig. 6 die pneumatische Bremsanlage des Anhängefahrzeugs mit Notbremsventil und einer erweiterten Ausführung des Park-Löse-Ventils in Fahrtstellung,
Fig. 7 einen Ausschnitt aus Figur 6, nämlich das Park-Löse-Ventil in Fahrtstellung,
Fig. 8 das Park-Löse-Ventil gemäß Fig. 7, im Schnitt entlang einer axial gerichteten Ebene, in Parkstellung,
Fig. 9 das Park-Löse-Ventil gemäß Fig. 8 in Lösestellung,
Fig.10 das Park-Löse-Ventil gemäß Fig. 8 in Fahrtstellung ohne Bremsdruck,
Fig.11 das Park-Löse-Ventil gemäß Fig. 8 in Fahrtstellung mit Bremsdruck, entsprechend den Darstellungen in Fig. 6 und 7.

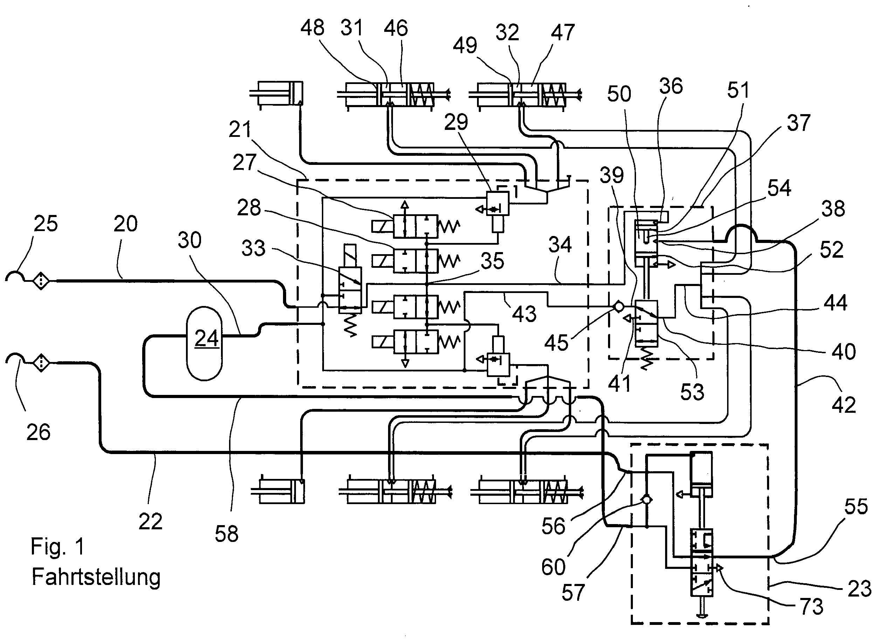

Figur 1 zeigt eine pneumatische Bremsanlage für ein Anhängefahrzeug. Eine Steuerdruckleitung 20 führt zu einem Anhängerbremsmodul 21. Eine Vorratsdruckleitung 22 führt zu einem Park-Löse-Ventil 23 und von diesem weiter über einen Vorratsbehälter 24 zum Anhängerbremsmodul 21. Der Steuerdruckleitung 20 ist ein Steueranschluss 25 zugeordnet, der Vorratsdruckleitung 22 ein Versorgungsanschluss 26.

Das Anhängerbremsmodul 21 ist in bekannter Weise aufgebaut, nämlich je Fahrzeugseite mit zwei Magnetventilen 27, 28 und einem Relaisventil 29. Über die Magnetventile 27, 28 wird die Zufuhr des Steuerdrucks zu den Relaisventilen 29 geregelt. Letztere sind über eine Leitung 30 mit Verzweigungen zugleich an Vorratsbehälterdruck aus dem Vorratsbehälter 24 angeschlossen und geben ausgesteuerten Betriebsbremsdruck an Betriebsbremszylinder 31, 32 ab.

Weiterer Bestandteil des Anhängerbremsmoduls 21 ist ein Redundanzventil 33 als Magnetventil, mit dem die Verbindung zwischen der Steuerdruckleitung 20 und einer Leitung 34 trennbar und umstellbar ist. Auf diese Weise kann die Leitung 34 alternativ mit der Leitung 30 und dem Vorratsbehälterdruck aus dem Vorratsbehälter 24 verbunden werden. Die Leitung 34 verbindet außerdem über einen Abzweig 35 die Magnetventile 28 beider Fahrzeugseiten miteinander.

Weiterhin verbindet die Leitung 34 (bei entsprechend geschaltetem Redundanzventil 33) die Steuerdruckleitung 20 oder die Leitung 30 mit einem ersten Steuereingang 36 einer Ventilanordnung 37. Die Ventilanordnung 37 hat hier insbesondere die Funktion eines Notbremsventils mit Überlastschutz und weist hierzu noch einen zweiten Steuereingang 38, sowie einen ersten Anschluss 39, einen zweiten Anschluss 40 und einen dritten Anschluss 41 auf.

Der zweite Steuereingang 38 ist über eine Leitung 42 und das Park-Löse-Ventil 23 an die Vorratsdruckleitung 22 angeschlossen. Der erste Anschluss 39 ist über eine Leitung 43, ein Rückschlagventil 45 und das Anhängerbremsmodul 21 mit dem Vorratsbehälter 24 verbunden. Der zweite Anschluss 40 ist über eine Leitung 44 und Verzweigungen mit Federspeicher-Bremszylindern 46, 47 beider Fahrzeugseiten verbunden. Der dritte Anschluss 41 ist ein Entlüftungsanschluss.

In der gezeigten Bremsanlage sind die Betriebsbremszylinder 31, 32 Bestandteile sogenannter Kombizylinder, nämlich mit integrierten Federspeicher-Bremszylindern 46, 47, wobei die Kräfte beim Betätigen der Betriebsbremse einerseits und von Federspeichern andererseits auf jeweils dieselben Bremskolben 48, 49 wirken.

In Fahrtstellung gemäß Figur 1 ist die pneumatische Bremsanlage in Bereitschaft. Das heißt, die Federspeicher-Bremszylinder 46, 47 sind durch Vorratsbehälterdruck aus dem Vorratsbehälter 24 belüftet. Hierzu ist der erste Anschluss 39 mit dem zweiten Anschluss 40 über die Ventilanordnung 37 verbunden.

Die Ventilanordnung 37 befindet sich in einer aktiv geschalteten, zweiten Schaltstellung. Ausgelöst ist diese zweite Schaltstellung durch den am zweiten Steuereingang 38 anliegenden Vorratsdruck von mindestens 2,5 bar auf der Vorratsdruckleitung 22. Der Vorratsdruck wird hierzu von der Vorratsdruckleitung 22 durch das Park-Löse-Ventil 23 und durch die Leitung 42 bis zum zweiten Steuereingang 38 geführt. Der dort anliegende Vorratsdruck beaufschlagt einen Zylinderraum 50 zwischen zwei koaxial in Reihe angeordneten Kolben 51, 52, so dass eine Ventileinheit 53 durch Druck des Kolbens 52 die in Figur 1 gezeigte Stellung einnimmt. Dabei liegt am ersten Steuereingang 36 kein Druck an.

Der Kolben 54 ist druckabhängig zwischen den Steuereingängen 36, 38 verschiebbar und in Richtung auf den Kolben 52 mit einem Abstandhalter 54 versehen. Ergänzend sind der Zylinderraum 50 so dimensioniert und die Steuereingänge 36, 38 so positioniert, dass bei Druck an wenigstens einem der Steuereingänge 36, 38 der Kolben 52 beaufschlagt wird (durch Druck oder den Abstandhalter 54) und die Ventileinheit 53 die gezeigte Fahrstellung einnimmt. Da kein Steuerdruck aus der Steuerdruckleitung 20 anliegt, sind auch die Betriebsbremszylinder 31, 32 unbelüftet.

Das Park-Löse-Ventil 23 weist hier drei Anschlüsse auf, nämlich einen Anschluss 55 für die Leitung 42, einen Anschluss 56 für die Vorratsdruckleitung 22 und einen Anschluss 57 für eine Leitung 58 zum Vorratsbehälter 24 mit Vorratsbehälterdruck. Innerhalb des Park-Löse-Ventils 23 sind die Anschlüsse 56, 57 über einen Abzweig 59 mit Rückschlagventil 60 miteinander verbunden. Letzteres ist so angeordnet, dass der Vorratsbehälterdruck am Anschluss 57 nicht zu einem eventuell niedrigeren Vorratsdruck am Anschluss 56 abströmen kann.

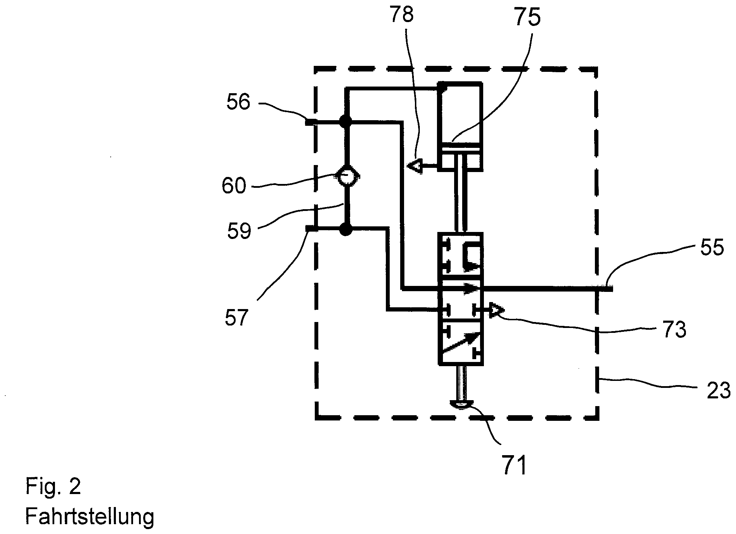

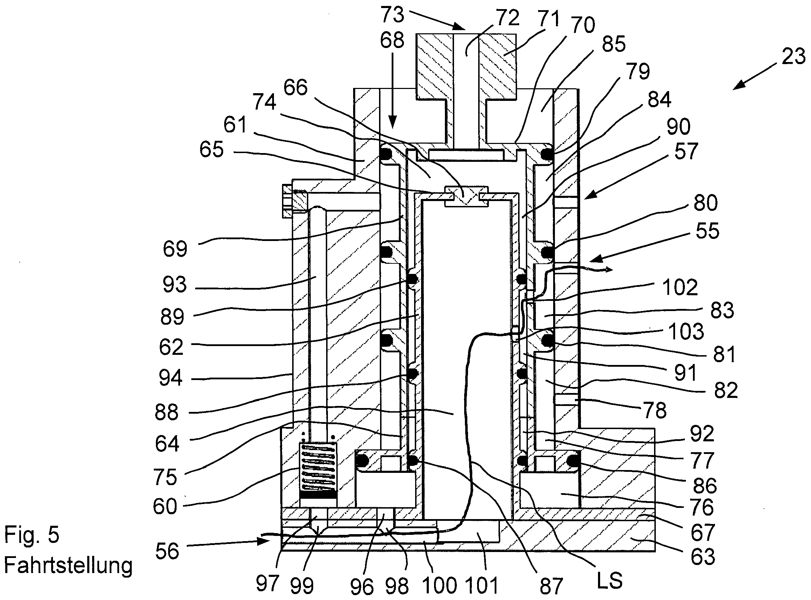

Nachfolgend werden Aufbau und Funktion einer ersten Ausführungsform des Park-Löse-Ventils 23 im Detail erläutert:
Ausgehend von den Figuren 1 und 2 wird zunächst Bezug genommen auf Figur 5, nämlich das Park-Löse-Ventil 23 in Fahrtstellung. Das Park-Löse-Ventil 23 weist hier ein im Wesentlichen dreiteiliges Gehäuse auf, mit einem Zylinder 61, einem hierzu koaxialen Innenzylinder 62 und einem Bodenteil 63. Der Innenzylinder 62 weist einen Innenraum 64, an einer oberen geschlossenen Stirnseite 65 eine verschlossene Bohrung 66 und an seiner offenen Unterseite einen radial umlaufenden Rand 67 auf. Letzterer ist zwischen dem Bodenteil 63 und dem Zylinder 61 gehalten. Zylinder 61, Rand 67 und Bodenteil 63 sind in nicht gezeigter Weise miteinander fest verbunden. Dabei kann die Verbindung auch lösbar sein, etwa zu Wartungszwecken.

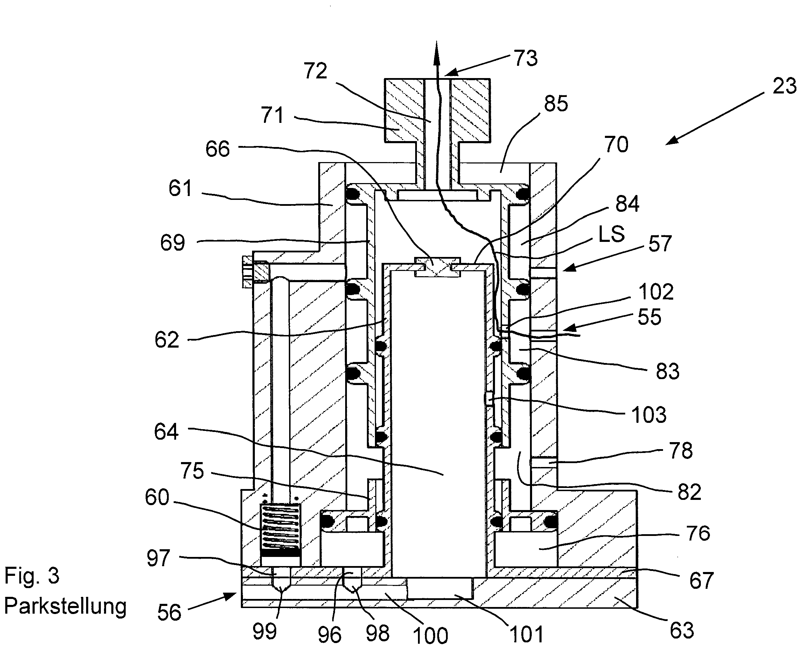

Die räumliche Ausrichtung der Teile durch die Begriffe "oben" und "unten" bezieht sich auf die Darstellung in den Figuren 3 bis 5 und 8 bis 11. Je nach Einbaulage des Park-Löse-Ventils 23 kann sich eine andere Ausrichtung ergeben. In den Figuren 3 bis 5 und 8 bis 11 ist eine Luftströmung LS durch das Park-Löse-Ventil 23 eingezeichnet.

Zwischen Innenzylinder 62 und Zylinder 61 ist ein Ringraum 68 gebildet, in dem ein hohler und nach unten offener Steuerkolben 69 bewegbar angeordnet ist. Der Steuerkolben 69 sitzt auf dem Innenzylinder 62 und weist an seiner oberen Stirnseite 70 ein vom Bedienungspersonal manuell bedienbares Betätigungsorgan, nämlich einen Betätigungsknauf 71 auf. Letzterer steht teilweise oder ganz (je nach Stellung des Steuerkolbens 69) aus dem oben offenen Zylinder 61 heraus.

Der Steuerkolben 69 ist oben mit einem Entlüftungskanal 72 versehen, welcher sich von einem Ausgang für Entlüftung 73 bis zu einem Kopfraum 74 oberhalb der Stirnseite 65 des Innenzylinders 62 erstreckt.

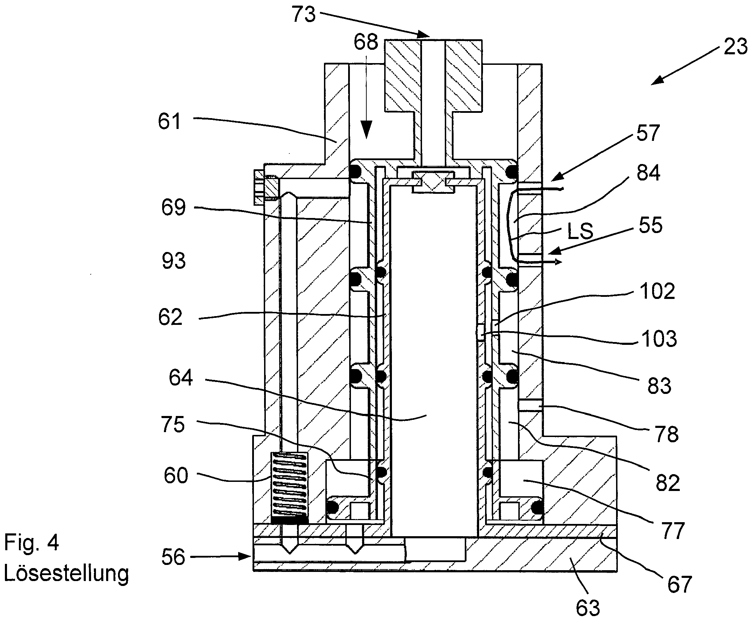

Koaxial zum Steuerkolben 69 und unterhalb desselben ist auf dem Innenzylinder 62 bzw. im Ringraum 68 ein Kolbenschieber 75 verschiebbar gehalten. Letzterer ist zwischen einer unteren, drucklosen Position (siehe Figur 4) und einer mit Druck beaufschlagten, oberen Position (Figuren 3, 5) bewegbar und trennt einen unteren Druckraum 76 von einem darüber liegenden Entlüftungsraum 77. Der Entlüftungsraum 77 weist eine nach außen gerichtete Entlüftungsöffnung 78 im Zylinder 61 auf.

Der Steuerkolben 69 ist außenseitig mit drei umlaufenden Stegen mit Dichtungen 79, 80, 81 versehen. Durch letztere ist der Ringraum 68 außerhalb des Steuerkolbens 69 unterteilt in eine untere, erste Außenzone 82, eine darüber liegende, zweite Außenzone 83, eine darüber liegende, dritte Außenzone 84 und eine oberhalb der Stirnseite 70 liegende vierte Außenzone 85. Die erste Außenzone 82 geht in den Entlüftungsraum 77 über.

Der Kolbenschieber 75 weist im Bereich des Druckraums 76 einen erweiterten Außendurchmesser mit einer außen umlaufenden Dichtung 86 auf. Entsprechend ist der Druckraum 76 mit einem größeren Querschnitt versehen als der Entlüftungsraum 77.

Der Innenzylinder 62 ist außenseitig mit drei umlaufenden, in Stegen gehaltenen Dichtungen 87, 88, 89 versehen. Oberhalb der obersten Dichtung 89 ergibt sich so eine erste Innenzone 90 und oberhalb der mittleren Dichtung 88 eine zweite Innenzone 91. Zwischen der mittleren Dichtung 88 und der unteren Dichtung 87 ist eine dritte Innenzone 92 gebildet. Die obere Dichtung 89 und die mittlere Dichtung 88 dichten gegenüber dem Steuerkolben 69 ab, während die untere Dichtung 87 innenseitig am Kolbenschieber 75 anliegt.

Der Ringraum 68 ist im Bereich der dritten Außenzone 84 durch einen Verbindungskanal 93 in einer Seitenwand 94 des Zylinders 61 mit einem Rückschlagventil 60 verbunden. Auch dieses ist noch in der Seitenwand 94 angeordnet.

Der umlaufende Rand 67 des Innenzylinders 62 weist im Bereich des Druckraumes 76 einen axial gerichteten ersten Kanal 96 und im Bereich des Rückschlagventils 60 einen zweiten Kanal 97 auf. Die beiden Kanäle 96 und 97 sind über Abzweige 98, 99 im Bodenteil 63 mit einem radial verlaufenden dritten Kanal 100 verbunden. Dieser verbindet außerdem den Anschluss für Vorratsdruck 56 mit einem mittigen Abzweig 101 im Bodenteil 63. Der mittige Abzweig 101 ist eine Ausnehmung, die zum Innenraum 64 offen ist.

Im Bereich der zweiten Außenzone 83, also zwischen den Dichtungen 88, 89 ist der Steuerkolben 69 mit einer Öffnung 102 versehen. Dazu korrespondierend weist der Innenzylinder 62 im Bereich der zweiten Innenzone 91, also zwischen den Dichtungen 88 und 89 eine Öffnung 103 auf.

Die drei verschiedenen Stellungen des Steuerkolbens 69 werden vom Bedienungspersonal am Betätigungsknauf 71 durch Herausziehen oder Eindrücken des Steuerkolbens 69 eingestellt. Hierzu können der Steuerkolben 69, der Zylinder 61 und/oder der Innenzylinder 62 nicht gezeigte Rastorgane aufweisen.

Die Fahrtstellung gemäß Figur 5 wird typischerweise vom Bedienungspersonal eingelegt, wenn Anhänger und Zugfahrzeug pneumatisch miteinander verbunden sind und demnach Vorratsdruck im Anhänger zur Verfügung steht. Der Vorratsdruck gelangt über den Anschluss 56, das Rückschlagventil 60 und den Verbindungskanal 93 zum Anschluss für Vorratsbehälterdruck 57. Außerdem gelangt Vorratsdruck von Anschluss 56 durch den dritten Kanal 100, über den Abzweig 101 durch den Innenraum 64, die Öffnung 103, die zweite Innenzone 91, die Öffnung 102 und die zweite Außenzone 83 zum Anschluss als Druckausgang 55, so dass die Federspeicher-Bremszylinder 46, 47 in Figur 1 mittelbar (über die Ventilanordnung 37) belüftet werden. Eine entsprechende Luftströmung LS zwischen den Anschlüssen 56 und 55 ist eingezeichnet.

Zugleich liegt der Vorratsdruck über den Abzweig 98 und den ersten Kanal 96 auch im Druckraum 76 an, so dass der Kolbenschieber 75 in seiner oberen Position steht und dabei am Steuerkolben 69 in axialer Richtung anliegt. Der Vorratsdruck steht somit einer weiteren Abwärtsbewegung des Steuerkolbens 69 entgegen.

Die Parkstellung gemäß Figur 3 wird vom Bedienungspersonal eingelegt, wenn Zugfahrzeug und Anhänger noch miteinander verbunden sind, der Anhänger aber vom Zugfahrzeug gelöst werden soll. Hierzu wird der Steuerkolben 69 relativ zur Parkstellung aus dem Zylinder 61 soweit herausgezogen, bis die Öffnung 102 oberhalb der umlaufenden Dichtung 89 liegt. Dadurch ist die Verbindung vom Anschluss für Vorratsdruck 56 zum Anschluss als Druckausgang 55 versperrt, weil die zweite Innenzone 91 dann nur noch zum Innenraum 64 geöffnet ist. Stattdessen besteht eine Verbindung zwischen dem Anschluss als Druckausgang 55 entlang der ersten Innenzone 90 und des Kopfraums 74 über den Entlüftungskanal 72 zum Ausgang für Entlüftung 73. Daneben kann noch Vorratsdruck über das Rückschlagventil 60 zum Anschluss für Vorratsbehälterdruck 57 gelangen.

Zum Bewegen eines abgestellten, vom Zugfahrzeug gelösten Anhängers kann das Park-Löse-Ventil 23 umgeschaltet werden in die Lösestellung gemäß Fig. 4. Hierzu wird der Steuerkolben 69 bis in eine untere Endposition in den Zylinder 61 hineingedrückt. Dabei gelangt die dritte Außenzone 84 über den Anschluss für Vorratsbehälterdruck 57 und den Anschluss als Druckausgang 55. Dadurch wird die Ventileinheit 37 (Fig. 1) aus dem Vorratsbehälter 24 angesteuert, so dass die Federspeicher-Bremszylinder 46, 47 belüftet werden und der Anhänger bewegt werden kann.

Da in Lösestellung gemäß Fig. 4 der Anhänger vom Zugfahrzeug getrennt ist, liegt am Anschluss für Vorratsdruck 56 kein Druck an. Entsprechend kann auch der Kolbenschieber 75 nicht gegen den Steuerkolben 69 arbeiten. Außerdem ist das Rückschlagventil 60 verschlossen. Die Öffnungen 102, 103 liegen zwar übereinander, sind aber wirkungslos, da die zweite Außenzone 83 in dieser Stellung keinem der Anschlüsse 55, 57 zugewandt ist.

Die Entlüftungsöffnung 78 dient nur der Entlüftung der ersten Außenzone 82 bzw. des Entlüftungsraums 77 bei Bewegung des Kolbenschiebers 75.

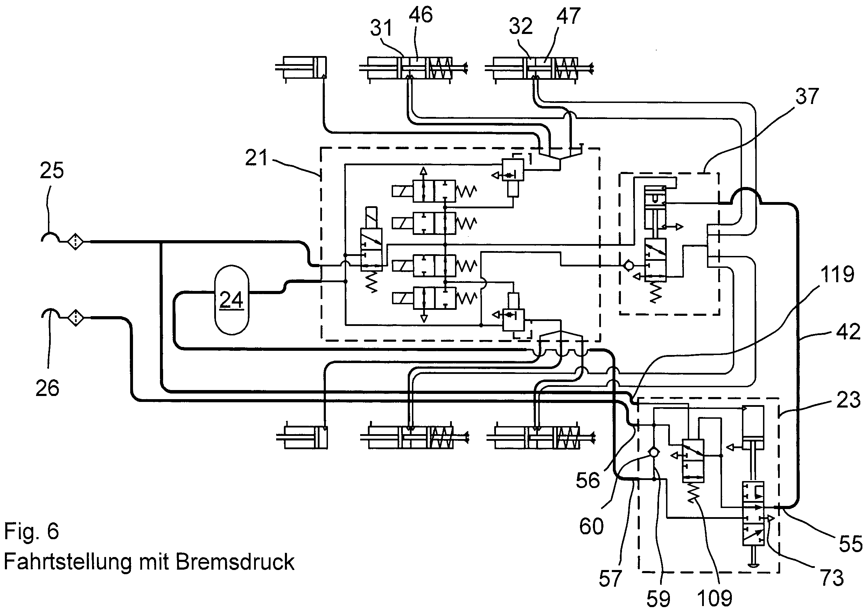

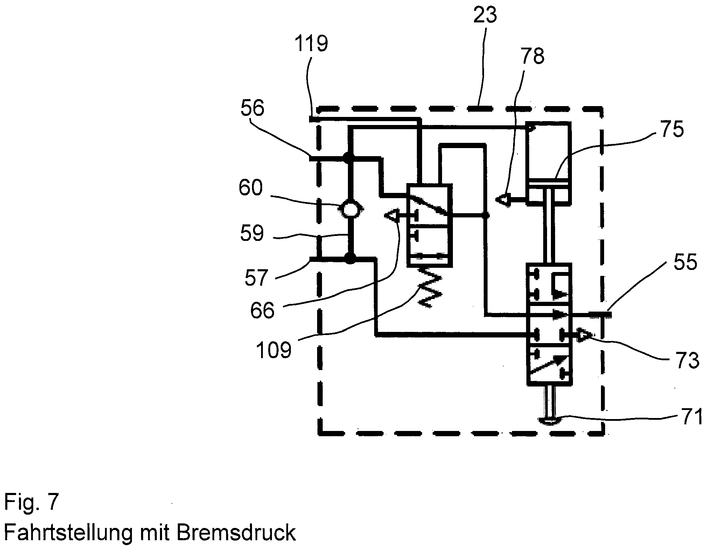

Eine Besonderheit des Park-Löse-Ventils 23 ist der modulare Aufbau mit Bodenteil 63, Innenzylinder 62 mit Rand 67 und Zylinder 61. Durch geringfügige Umgestaltung des Bodenteils, Öffnung der verschlossenen Bohrung 66 und Ergänzung dreier Bauteile kann auf einfache Weise eine Zusatzfunktion realisiert werden, die nachfolgend anhand der Figuren 6 bis 11 erläutert wird.

Das Park-Löse-Ventil 23 weist in dieser Ausführungsform zusätzlich einen Sperrschieber 104 und einen Steuerschieber 105 auf. Der Sperrschieber 104 ist im Innenzylinder 62 axial verschiebbar gehalten, weist an seiner oberen Stirnseite eine Dichtfläche 106 und an seinem unteren Ende, außerhalb des Innenzylinders 62, einen umlaufenden Kragen 107 auf. Der Außendurchmesser des Sperrschiebers 104 ist etwas kleiner als der Innendurchmesser des Innenzylinders 62, so dass ein Ringraum 108 für eine Luftströmung verbleibt.

Ein oberes Drittel des Sperrschiebers 104 ist mit einem nochmals reduzierten Außendurchmesser versehen zur Aufnahme einer Rückstellfeder 109 (Druckfeder). Die benachbarte Bohrung 66 ist hier nicht verschlossen.

Fast an seinem unteren Ende, jedoch mit Abstand zum Kragen 107 weist der Sperrschieber 104 eine umlaufende Dichtung 110 auf, welche am Innenzylinder 62 anliegt. Von einer unteren Stirnseite 111 des Sperrschiebers 104 erstreckt sich ein Sperrschieberkanal 112 zunächst axial und dann radial bis in den Ringraum 108 oberhalb der Dichtung 110.

Das Bodenteil 63 ist in dieser Ausführungsform deutlich dicker ausgebildet. An Stelle des Abzweigs 101 ist eine tiefere, zylindrische Ausnehmung 113 koaxial zum Sperrschieber 104 vorgesehen. Die Ausnehmung 113 weist nach oben hin, also zum Innenzylinder 62 eine zylindrische Querschnittsverbreiterung 114 auf, so dass ein Absatz 115 gebildet ist, in den ein Dichtring 116 eingelegt ist.

Der Kragen 107 des Sperrschiebers 104 ist passend zur Querschnittsverbreiterung 114 ausgebildet und bewegt sich in dieser auf und ab. In einer unteren Position liegt der Kragen 107 am Dichtring 116 an.

Der Steuerschieber 105 ist an die Abmessungen der Ausnehmung 113 unterhalb der Querschnittsverbreiterung 114 angepasst und weist eine in Radialrichtung wirksame umlaufende Dichtung 117 auf. Außerdem ist im Steuerschieber 105 ein Steuerschieberkanal 118 vorgesehen, zur Verbindung von benachbartem Sperrschieberkanal 112 in die Querschnittsverbreiterung 114 hinein. Diese ist mittelbar angeschlossen an den Anschluss für Vorratsdruck 56, im vorliegenden Ausführungsbeispiel über den dritten Kanal 100 und den Abzweig 98.

An die Ausnehmung 113 schließt in Axialrichtung nach unten ein Anschluss für Bremsdruck 119 an. Sofern hier Bremsdruck oberhalb eines bestimmten Grenzwertes anliegt, drückt der Steuerschieber 105 den Sperrschieber 104 gegen den Druck der Rückstellfeder 109 aufwärts, bis der Kragen 107 am umlaufenden Rand 67 des Innenzylinders 62 anliegt.

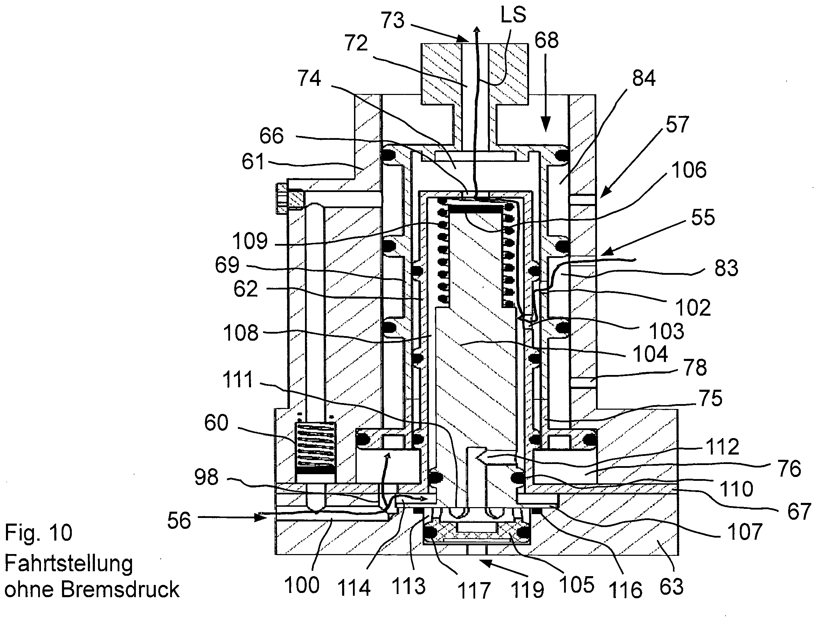

Fig. 10 zeigt die Fahrtstellung ohne anliegenden Bremsdruck. Dieser Zustand ist typischerweise gegeben nach dem Anhängen eines abgestellten Anhängers an ein Zugfahrzeug und dem Verbinden der pneumatischen Leitungen. Am Anschluss für Vorratsdruck 56 liegt Druck an, der Kolbenschieber 75 ist in seiner oberen Position, analog Fig. 5. Jedoch gelangt keine Druckluft zum Anschluss als Druckausgang 55, da der Sperrschieber 104 durch die Wirkung seiner Rückstellfeder 109 in seiner unteren Stellung, nämlich seiner Druck-Sperrstellung steht. Die Dichtung 110 und der Dichtring 116 dichten gegenüber dem Vorratsdruck ab, so dass (anders als in Fig. 5) keine Druckluft zur Öffnung 103 gelangen kann. Zugleich ist die obere Dichtung 106 von der offenen Bohrung 66 abgehoben, so dass an dieser Stelle gegebenenfalls noch vorhandener Druck entlang des Anschlusses als Druckausgang 55, der Öffnungen 102, 103 des Innenraums 108, der Bohrung 66 und des Entlüftungskanals 72 abströmen kann. Bezogen auf die Bohrung 66 befindet sich der Sperrschieber 104 dabei in einer Entlüftungs-Durchlassstellung. In dieser Stellung bleiben die Federspeicher-Bremszylinder 46, 47 entlüftet. Dadurch bleibt der Anhänger bis auf Weiteres gebremst. Ein unbeabsichtigtes Anrollen des Anhängers direkt nach dem Anschließen des Vorratsdrucks kann nicht eintreten.

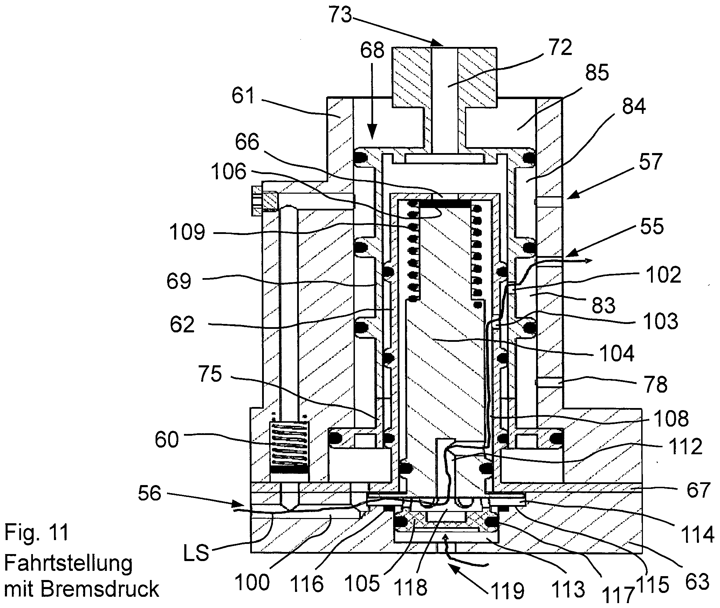

Zum Lösen der Federspeicherbremsen des Anhängers muss der Fahrer zunächst das Bremspedal betätigen, um so Bremsdruck über den Anschluss für Bremsdruck 119 in das Park-Löse-Ventil 23 einzusteuern, siehe Fig. 11. Sobald der eingesteuerte Bremsdruck ausreicht um die Kraft der Rückstellfeder 109 zu überwinden, drückt der Steuerschieber 105 den Sperrschieber 104 nach oben und mit der Dichtfläche 106 gegen die Bohrung 66, so dass diese verschlossen ist. Der Vorratsdruck kann dann über den Anschluss für Vorratsdruck 56, den dritten Kanal 100, die Querschnittsverbreiterung 114, den Steuerschieberkanal 118, den Sperrschieberkanal 112, den Innenraum 108, die Öffnungen 103, 102 zum Anschluss als Druckausgang 55 gelangen und mittelbar (über die Ventilanordnung 37) die Federspeicher-Bremszylinder 46, 47 belüften. Der Sperrschieber 104 befindet sich dabei bezüglich der Bohrung 66 in Entlüftungs-Sperrstellung und bezüglich des Vorratsdrucks in einer Druck-Durchlassstellung.

Nach dem Lösen des Bremspedals bzw. der Rücknahme des Bremsdrucks bleibt der Sperrschieber 104 in seiner Position gemäß Fig. 11 aufgrund der Wirkung des Vorratsdrucks, welcher gegen die Rückstellfeder 109 wirkt. Die Kraft der Rückstellfeder 109 ist an die auftretenden Bremsdrücke angepasst. Der Mindestbremsdruck zur Überwindung der Kraft der Rückstellfeder 109 liegt vorzugsweise in einem Bereich von 2 bis 5 bar.

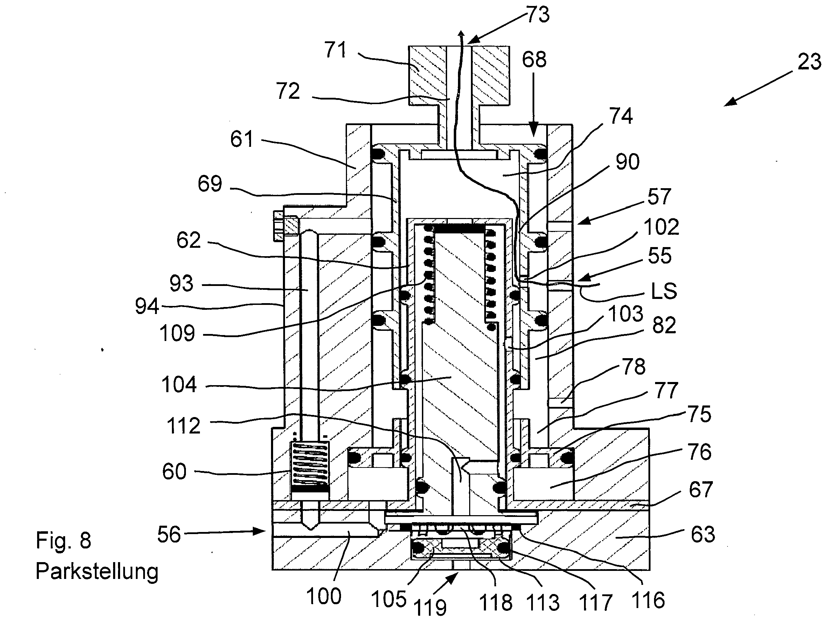

In Parkstellung gemäß Fig. 8 und noch anliegendem Vorratsdruck bleibt der Sperrschieber 104 in seiner oberen Position (Entlüftungs-Sperrstellung/Druck-Durchlassstellung). Die Federspeicher-Bremszylinder 46, 47 werden wie in Fig. 3 über den Anschluss als Druckausgang 55, die Öffnung 102, die erste Innenzone 90, den Kopfraum 74, den Entlüftungskanal 72 und den Ausgang für Entlüftung 73 entlüftet. Dabei kommt es auf die Position des Steuerschiebers 105 nicht an. Aufgrund des Vorratsdrucks wird sich dieser aber in seiner unteren Position nahe dem Anschluss für Bremsdruck 119 befinden, wie in Fig. 8 gezeigt.

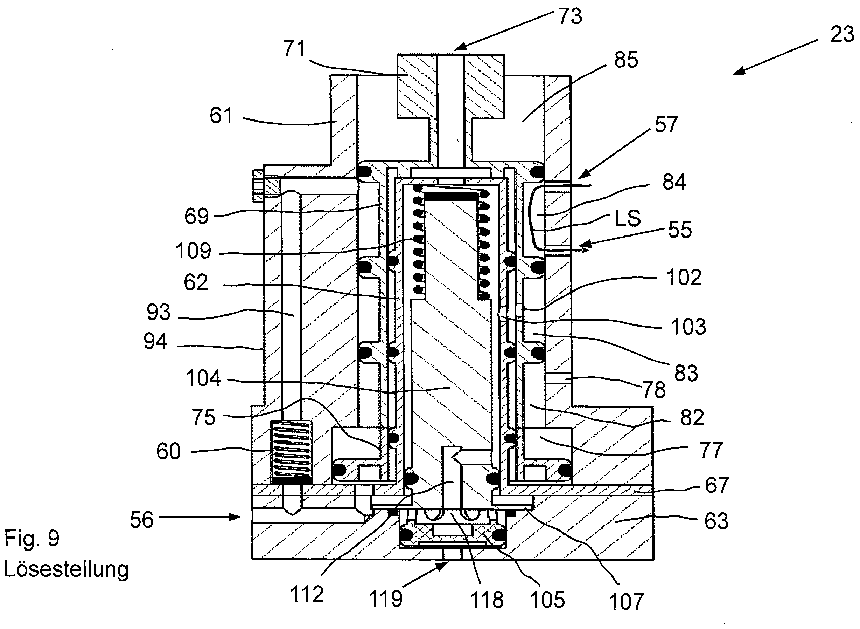

In Lösestellung gemäß Fig. 9 ist der Anhänger vom Zugfahrzeug getrennt, sodass kein Vorratsdruck am Anschluss 56 anliegt. Analog zu Fig. 4 werden die Federspeicher-Bremszylinder 46, 47 über den Anschluss für Vorratsbehälterdruck 57, die dritte Außenzone 84 und den Anschluss als Druckausgang 55 mittelbar belüftet. Bremsdruck liegt nicht an. Entsprechend stehen der Steuerschieber 105 und der Sperrschieber 104 durch den Druck der Rückstellfeder 109 in ihrer unteren Stellung.

## Patentansprüche

1. Park-Löse-Ventil (23) für ein Anhängefahrzeug mit pneumatischer Bremsanlage und mit folgenden Merkmalen:
a) ein Steuerkolben (69) und ein Kolbenschieber (75),
b)
- ein Anschluss für Vorratsdruck (56),
- ein Anschluss für Vorratsbehälterdruck (57),
- ein Ausgang für Entlüftung (73),
- ein Anschluss als Druckausgang (55),
c) der Steuerkolben (69) ist zumindest zwischen drei voneinander verschiedenen Stellungen bewegbar:
- einer Lösestellung, dabei ist der Anschluss für Vorratsbehälterdruck (57) mit dem Anschluss als Druckausgang (55) verbunden,
- einer Fahrtstellung, dabei ist der Anschluss für Vorratsdruck (56) mit dem Anschluss als Druckausgang (55) oder mit dem Anschluss für Vorratsbehälterdruck (57) und mit dem Anschluss als Druckausgang (55) verbunden,
- einer Parkstellung, dabei ist der Anschluss als Druckausgang (55) mit dem Ausgang für Entlüftung (73) verbunden,
d) in Fahrtstellung ist der Kolbenschieber (75) mit Vorratsdruck (56) beaufschlagt und drückt gegen den Steuerkolben (69), derart, dass der Steuerkolben (69) in seiner Bewegung eingeschränkt ist und keine Lösestellung annehmen kann, **gekennzeichnet durch** einen zumindest zwischen einer Druck-Sperrstellung und einer Druck-Durchlassstellung bewegbaren Sperrschieber (104), wobei in Druck-Sperrstellung eine Verbindung vom Anschluss für Vorratsdruck (56) zum Anschluss als Druckausgang (55) gesperrt ist, und vorzugsweise mit einem Steuerschieber (105) zum Beaufschlagen des Sperrschiebers (104) in Abhängigkeit von einem an einem Anschluss für Bremsdruck (119) anliegenden Bremsdruck, derart, dass der Steuerschieber (105) den Sperrschieber (104) bis in Druck-Durchlassstellung bewegt und/oder dort hält, wenn am Anschluss für Bremsdruck (119) ein Bremsdruck oberhalb eines Grenzwerts anliegt.

2. Park-Löse-Ventil (23) nach Anspruch 1, **dadurch gekennzeichnet, dass** Steuerkolben (69) und Kolbenschieber (75) hohl und auf einem gemeinsamen Träger koaxial hintereinander angeordnet und axial verschiebbar sind.

3. Park-Löse-Ventil (23) nach Anspruch 1 oder 2, **gekennzeichnet durch** folgende Merkmale:
a) in einem Zylinder (61) ist ein Innenzylinder (62) angeordnet und bildet dabei einen Ringraum (68) zwischen Zylinder (61) und Innenzylinder (62),
b) der Steuerkolben (69) ist hohl ausgebildet,
c) der Steuerkolben (69) ist auf dem Innenzylinder (62) und dabei zugleich im Ringraum (68) axial bewegbar,
d) der Kolbenschieber (75) ist nach Art einer Hülse axial beidseitig offen ausgebildet, auf dem Innenzylinder (62) axial bewegbar und trennt einen Druckraum (76) des Ringraums (68) von einem Entlüftungsraum (77) des Ringraums (68),
e) der Zylinder (61) weist im Bereich des Entlüftungsraums (77) eine Entlüftungsöffnung (78) auf,
f) der Druckraum (76) ist mit dem Anschluss für Vorratsdruck (56) verbunden.

4. Park-Löse-Ventil (23) nach Anspruch 3, **gekennzeichnet durch** folgende Merkmale:
a) der Steuerkolben (69) überdeckt den Innenzylinder (62) in axialer Richtung zumindest teilweise,
b) der Steuerkolben (69) weist drei außen umlaufende Dichtungen (79, 80, 81) zum Zylinder (61) auf, zur Bildung von vier Außenzonen, nämlich
- einer ersten Außenzone (82) als Entlüftungsraum und mit der Entlüftungsöffnung (78),
- einer zweiten Außenzone (83), die je nach Stand des Steuerkolbens (69) mit dem Anschluss als Druckausgang (55) verbunden sein kann,
- einer dritten Außenzone (84) in Verbindung mit dem Anschluss für Vorratsbehälterdruck (57) und die je nach Stand des Steuerkolbens (69) mit dem Anschluss als Druckausgang (55) verbunden sein kann,
- und einer insbesondere drucklosen vierten Außenzone (85),
c) der Steuerkolben (69) weist an einer dem Kolbenschieber (75) abgewandten Seite, im Bereich eines Kopfraums (74), den Ausgang für Entlüftung (73) auf,
d) der Steuerkolben (69) weist im Bereich der zweiten Außenzone (83) eine Öffnung (102) auf, die je nach Position des Steuerkolbens (69) in eine mit dem Kopfraum (74) verbundene erste Innenzone (90) oder eine hierzu benachbarte zweite Innenzone (91) mündet,
e) in Parkstellung mündet die Öffnung (102) in die erste Innenzone (90), derart, dass eine Verbindung vom Ausgang für Entlüftung (73), über den Kopfraum (74), die erste Innenzone (90) und die zweite Außenzone (83) zum Anschluss als Druckausgang (55) besteht.

5. Park-Löse-Ventil (23) nach Anspruch 4, **gekennzeichnet durch** folgende Merkmale:
a) der Innenzylinder (62) weist mehrere außen umlaufende Dichtungen (87, 88, 89) auf, zur Bildung mehrerer Innenzonen (90, 91, 92), wobei der Innenzylinder (62) im Bereich einer zweiten Innenzone (91) mit einer Öffnung (103) in einen Innenraum (64) versehen ist,
b) der Anschluss für Vorratsdruck (56) ist mit dem Innenraum (64) des Innenzylinders verbunden.

6. Park-Löse-Ventil (23) nach Anspruch 3 oder einem oder mehreren der vorherigen Ansprüche, **dadurch gekennzeichnet, dass** der Kolbenschieber (75) einen größeren Wirkungsquerschnitt aufweist als der Steuerkolben (69), und dass hierzu insbesondere der Zylinder (61) im Bereich des Kolbenschiebers (75) einen größeren Innenquerschnitt aufweist als im Bereich des Steuerkolbens (69).

7. Park-Löse-Ventil (23) nach Anspruch 1 oder einem oder mehreren der vorherigen Ansprüche, **dadurch gekennzeichnet, dass** der Steuerkolben (69) im Bereich eines Kolbenkopfes, insbesondere einer Stirnseite (70) den Ausgang für Entlüftung (73) aufweist, und dass an den Kolbenkopf ein Betätigungsorgan anschließt, welches einen Entlüftungskanal (72) als Teil des Ausgangs für Entlüftung (73) aufweist.

8. Park-Löse-Ventil (23) nach Anspruch 3 oder einem oder mehreren der vorherigen Ansprüche, **dadurch gekennzeichnet, dass** der Innenzylinder (62) im Bereich einer Kopfwandung, insbesondere einer Stirnseite (65), eine axiale Bohrung (66) aufweist, welche durch ein Verschlussorgan verschließbar ist.

9. Park-Löse-Ventil (23) nach Anspruch 5 oder einem oder mehreren der vorherigen Ansprüche, **dadurch gekennzeichnet, dass** in Fahrtstellung der Steuerkolben (69) so ausgerichtet ist, dass am Anschluss für Vorratsdruck (56) anliegender Druck durch die Öffnung (103) im Innenzylinder (62), die zweite Innenzone (91), die Öffnung (102) im Steuerkolben (69) und die zweite Außenzone (83) zum Anschluss als Druckausgang (55) gelangt.

10. Park-Löse-Ventil (23) nach Anspruch 5 oder einem oder mehreren der vorherigen Ansprüche, **dadurch gekennzeichnet, dass** in Parkstellung der Steuerkolben (69) so ausgerichtet ist, dass der Anschluss als Druckausgang (55) durch die zweite Außenzone (83), die Öffnung (102) im Steuerkolben (69), die erste Innenzone (90) und den Kopfraum (74) mit einem Entlüftungskanal (72) des Ausgangs für Entlüftung (79) verbunden ist.

11. Park-Löse-Ventil (23) nach Anspruch 1 oder einem oder mehreren der vorherigen Ansprüche, **dadurch gekennzeichnet, dass** der Anschluss für Vorratsdruck (56) und der Anschluss für Vorratsbehälterdruck (57) über ein Rückschlagventil (60) miteinander verbunden sind, derart, dass eine Luftströmung zum Anschluss für Vorratsdruck (56) gesperrt ist.

12. Park-Löse-Ventil (23) nach Anspruch 11, **dadurch gekennzeichnet, dass** das Rückschlagventil (60) in eine Wandung des Zylinders integriert ist.

13. Park-Löse-Ventil (23) nach Anspruch 3 oder einem oder mehreren der vorherigen Ansprüche, **dadurch gekennzeichnet, dass** der Innenzylinder (62) bodenseitig einen außen umlaufenden Rand (67) aufweist, und dass der Rand (67) einen mit dem Druckraum (76) verbundenen ersten Kanal (96) und einen mittelbar zum Anschluss für Vorratsbehälterdruck (57) führenden zweiten Kanal (97) aufweist.

14. Park-Löse-Ventil (23) nach Anspruch 13, **dadurch gekennzeichnet, dass** ein Innenraum (64) des Innenzylinders (62) durch ein Bodenteil (63) abgedeckt ist, wobei sich das Bodenteil (63) zumindest teilweise auch über den umlaufenden Rand (67) erstreckt, und dass im Bodenteil (63) ein dritter Kanal (100) vorgesehen ist, mit Verbindung zum Anschluss für Vorratsdruck (56), mit Abzweig zum ersten Kanal (96), mit Abzweig zum zweiten Kanal (97) und mit Abzweig zum Innenraum (64) des Innenzylinders (62).

15. Park-Löse-Ventil (23) nach Anspruch 14, **dadurch gekennzeichnet, dass** der umlaufende Rand (67) des Innenzylinders (62) zwischen einer Wandung des Zylinders (61) und dem Bodenteil (63) gehalten ist.

16. Park-Löse-Ventil nach Anspruch 3, **dadurch gekennzeichnet, dass** der Sperrschieber (104) in einem Innenzylinder (62) axial bewegbar ist, zwischen einer Entlüftungs-Sperrstellung und einer Entlüftungs-Durchlassstellung, dass der Innenzylinder (62) eine Bohrung (66) als Entlüftungsöffnung aufweist, und dass der Sperrschieber (104) in Entlüftungs-Sperrstellung die Bohrung (66) verschließt und in Entlüftungs-Durchlassstellung offen hält.

17. Park-Löse-Ventil nach Anspruch 16, **dadurch gekennzeichnet, dass** die Druck-Durchlassstellung des Sperrschiebers (104) zugleich dessen Entlüftungs-Sperrstellung ist und/oder dass die Druck-Sperrstellung zugleich die Entlüftungs-Durchlassstellung ist.

18. Park-Löse-Ventil nach Anspruch 17, **dadurch gekennzeichnet, dass** die Entlüftungsöffnung des Innenzylinders (62) einem Kopfraum (74) zwischen Steuerkolben (69) und Innenzylinder (62) zugewandt ist, und dass der Sperrschieber (104) zumindest nahe der als Entlüftungsöffnung vorgesehenen Bohrung (66) einen zumindest teilweise reduzierten Querschnitt aufweist, zur Bildung eines Raumes zwischen Innenzylinder (62) und Sperrschieber (104).

19. Park-Löse-Ventil nach Anspruch 1 oder einem oder mehreren der vorherigen Ansprüche, **dadurch gekennzeichnet, dass** der Sperrschieber (104) durch eine Rückstellfeder (109) in Richtung auf die Druck-Sperrstellung beaufschlagt ist.

20. Park-Löse-Ventil nach Anspruch 1 oder einem oder mehreren der vorherigen Ansprüche, **dadurch gekennzeichnet, dass** der Steuerschieber (105) in einer Ausnehmung (113) in einem Bodenteil (63) angeordnet ist, unterhalb des Innenzylinders (62).

21. Park-Löse-Ventil nach Anspruch 1 oder einem oder mehreren der vorherigen Ansprüche, **dadurch gekennzeichnet, dass** der Sperrschieber (104) an einem dem Steuerschieber (105) zugewandten Ende einen Kragen (107) aufweist, dass der Kragen (107) in einer Ausnehmung (113) in einem Bodenteil (63) angeordnet ist, dass die Ausnehmung (113) zur Aufnahme des Kragens (107) eine Querschnittsverbreiterung (114) aufweist, dass die Querschnittsverbreiterung (114) eine Verbindung zum Vorratsdruck aufweist, und dass der Kragen (107) in Druck-Sperrstellung des Sperrschiebers (104) die Verbindung zum Vorratsdruck verschließt.

22. Park-Löse-Ventil nach Anspruch 21 oder einem oder mehreren der vorherigen Ansprüche, **dadurch gekennzeichnet, dass** der Sperrschieber (104) einen Sperrschieberkanal (112) aufweist, zur Verbindung von der Ausnehmung (113) zu einem Raum zwischen Sperrschieber (104) und Innenzylinder (62).

23. Park-Löse-Ventil nach Anspruch 22, **dadurch gekennzeichnet, dass** der Steuerschieber (105) einen Steuerschieberkanal (118) aufweist, zur Verbindung vom Sperrschieberkanal (112) zum Vorratsdruck.

24. Park-Löse-Ventil nach einem oder mehreren der Ansprüchen 3-23, **dadurch gekennzeichnet, dass** ein Gehäuse zumindest dreiteilig vorgesehen ist, nämlich mit einem Hauptteil, in dem der Zylinder (61) ausgebildet ist, mit einem Mittelteil, in dem der Innenzylinder (62) ausgebildet ist, und mit einem Bodenteil (63) welches den Anschluss für Vorratsdruck (56) und einen Abzweig (101) in den Innenzylinder (62) aufweist.

25. Park-Löse-Ventil nach Anspruch 24, **dadurch gekennzeichnet, dass** ein radial umlaufender Rand (67) des Mittelteils zwischen dem Hauptteil und dem Bodenteil (63) gehalten ist.

26. Park-Löse-Ventil nach Anspruch 1 oder einem oder mehreren der vorherigen Ansprüche, **dadurch gekennzeichnet, dass** der Anschluss als Druckausgang (55) mittelbar oder unmittelbar mit Federspeicher-Bremszylindern (46, 47) verbindbar ist.

27. Ventilanordnung für ein Anhängefahrzeug, mit einem Park-Löse-Ventil (23) nach einem der voranstehenden Ansprüche und mit einer Ventilanordnung (37) als Notbremsventil, wobei ein Anschluss als Druckausgang (55) des Park-Löse-Ventils (23) mit einem Steuereingang (38) der Ventilanordnung (37) verbunden ist.

28. Ventilanordnung nach Anspruch 27, **dadurch gekennzeichnet, dass** die Ventilanordnung (37) einen Anschluss (40) als Druckausgang, einen Anschluss (39) für Vorratsbehälterdruck (57) und einen Anschluss (41) für Entlüftung aufweist, und dass je nach Schaltstellung der Anschluss (40) für den Druckausgang mit dem Anschluss (39) für Vorratsbehälterdruck oder mit dem Anschluss (41) für Entlüftung verbindbar ist.

29. Pneumatische Bremsanlage mit einer Ventilanordnung nach Anspruch 27 oder 28 oder mit einem Park-Löse-Ventil nach einem oder mehreren der Ansprüche 1 bis 26.

30. Anhängefahrzeug mit einer pneumatischen Bremsanlage nach Anspruch 29.

## Claims

1. Park release valve (23) for a trailer vehicle having a pneumatic brake system and having the following features:
a) a control piston (69) and a piston valve (75),
b)
- a connector for supply pressure (56),
- a connector for reservoir pressure (57),
- an outlet for venting (73),
- a connector as pressure outlet (55),
c) the control piston (69) can be moved at least between three positions which are different from one another:
- a release position; here, the connector for reservoir pressure (57) is connected to the connector as pressure outlet (55),
- a driving position; here, the connector for supply pressure (56) is connected to the connector as pressure outlet (55) or to the connector for reservoir pressure (57) and to the connector as pressure outlet (55),
- a park position; here, the connector as pressure outlet (55) is connected to the outlet for venting (73),
d) in the driving position, the piston valve (75) is loaded with supply pressure (56) and presses against the control piston (69) in such a way that the control piston (69) is limited in terms of its movement and cannot assume a release position, **characterized by** a gate valve (104) which can be moved at least between a pressure shut-off position and a pressure passage position, a connection from the connector for supply pressure (56) to the connector as pressure outlet (55) being shut off in the pressure shut-off position, and preferably with a control slide (105) for loading the gate valve (104) in a manner which is dependent on a brake pressure which prevails at a connector for brake pressure (119), in such a way that the control slide (105) moves the gate valve (104) as far as into the pressure passage position and/or holds it there if a brake pressure above a limit value prevails at the connector for brake pressure (119).

2. Park release valve (23) according to Claim 1, **characterized in that** the control piston (69) and the piston valve (75) are hollow, are arranged coaxially behind one another and can be displaced axially on a common carrier.

3. Park release valve (23) according to Claim 1 or 2, **characterized by** the following features:
a) an inner cylinder (62) is arranged in a cylinder (61) and forms an annular space (68) here between the cylinder (61) and the inner cylinder (62),
b) the control piston (69) is of hollow configuration,
c) the control piston (69) can be moved axially on the inner cylinder (62) and at the same time in the process in the annular space (68),
d) the piston valve (75) is of open configuration axially on both sides in the manner of a sleeve, can be moved axially on the inner cylinder (62), and separates a pressure space (76) of the annular space (68) from a venting space (77) of the annular space (68),
e) the cylinder (61) has a venting opening (78) in the region of the venting space (77),
f) the pressure space (76) is connected to the connector for supply pressure (56).

4. Park release valve (23) according to Claim 3, **characterized by** the following features:
a) the control piston (69) covers the inner cylinder (62) at least partially in the axial direction,
b) the control piston (69) has three seals (79, 80, 81) which run around on the outside towards the cylinder (61), for the formation of four outer zones, namely
- a first outer zone (82) as a venting space and with the venting opening (78),
- a second outer zone (83) which can be connected to the connector as pressure outlet (55) depending on the state of the control piston (69),
- a third outer zone (84) in connection with the connector for reservoir pressure (57) and which can be connected to the connector as pressure outlet (55) depending on the state of the control piston (69),
- and a fourth outer zone (85) which is, in particular, pressureless,
c) the control piston (69) has the outlet for venting (73) on a side which faces away from the piston valve (75), in the region of a head space (74),
d) in the region of the second outer zone (83), the control piston (69) has an opening (102) which, depending on the position of the control piston (69), opens into a first inner zone (90) which is connected to the head space (74) or a second inner zone (91) which is adjacent with respect to the said first inner zone (90),
e) in the park position, the opening (102) opens into the first inner zone (90) in such a way that there is a connection from the outlet for venting (73), via the head space (74), the first inner zone (90) and the second outer zone (83) to the connector as pressure outlet (55).

5. Park release valve (23) according to Claim 4, **characterized by** the following features:
a) the inner cylinder (62) has a plurality of seals (87, 88, 89) which run around on the outside, for the formation of a plurality of inner zones (90, 91, 92), the inner cylinder (62) being provided in the region of a second inner zone (91) with an opening (103) into an interior space (64),
b) the connector for supply pressure (56) is connected to the interior space (64) of the inner cylinder.

6. Park release valve (23) according to Claim 3 or one or more of the preceding claims, **characterized in that** the piston valve (75) has a greater active cross section than the control piston (69), and **in that** to this end, in particular, the cylinder (61) has a greater inner cross section in the region of the piston valve (75) than in the region of the control piston (69) .

7. Park release valve (23) according to Claim 1 or one or more of the preceding claims, **characterized in that** the control piston (69) has the outlet for venting (73) in the region of a piston head, in particular an end side (70), and **in that** the piston head is adjoined by an actuating member which has a venting channel (72) as part of the outlet for venting (73).

8. Park release valve (23) according to Claim 3 or one or more of the preceding claims, **characterized in that**, in the region of a head wall, in particular an end side (65), the inner cylinder (62) has an axial bore (66) which can be closed by way of a closure member.

9. Park release valve (23) according to Claim 5 or one or more of the preceding claims, **characterized in that**, in the driving position, the control piston (69) is oriented in such a way that pressure which prevails at the connector for supply pressure (56) passes through the opening (103) in the inner cylinder (62), the second inner zone (91), the opening (102) in the control piston (69) and the second outer zone (83) to the connector as pressure outlet (55).

10. Park release valve (23) according to Claim 5 or one or more of the preceding claims, **characterized in that**, in the park position, the control piston (69) is oriented in such a way that the connector as pressure outlet (55) is connected by way of the second outer zone (83), the opening (102) in the control piston (69), the first inner zone (90) and the head space (74) to a venting channel (72) of the outlet for venting (79) .

11. Park release valve (23) according to Claim 1 or one or more of the preceding claims, **characterized in that** the connector for supply pressure (56) and the connector for reservoir pressure (57) are connected to one another via a check valve (60) in such a way that an air flow to the connector for supply pressure (56) is shut off.

12. Park release valve (23) according to Claim 11, **characterized in that** the check valve (60) is integrated into a wall of the cylinder.

13. Park release valve (23) according to Claim 3 or one or more of the preceding claims, **characterized in that**, on the bottom side, the inner cylinder (62) has an edge (67) which runs around on the outside, and **in that** the edge (67) has a first channel (96) which is connected to the pressure space (76) and a second channel (97) which leads indirectly to the connector for reservoir pressure (57).

14. Park release valve (23) according to Claim 13, **characterized in that** an inner space (64) of the inner cylinder (62) is covered by way of a bottom part (63), the bottom part (63) also extending at least partially over the circumferential edge (67), and **in that** a third channel (100) is provided in the bottom part (63), with a connection to the connector for supply pressure (56), with a branch to the first channel (96), with a branch to the second channel (97) and with a branch to the interior space (64) of the inner cylinder (62).

15. Park release valve (23) according to Claim 14, **characterized in that** the circumferential edge (67) of the inner cylinder (62) is held between a wall of the cylinder (61) and the bottom part (63).

16. Park release valve according to Claim 3, **characterized in that** the gate valve (104) can be moved axially in an inner cylinder (62), between a venting shut-off position and a venting passage position, **in that** the inner cylinder (62) has a bore (66) as venting opening, and **in that** the gate valve (104) closes the bore (66) in the venting shut-off position and holds it open in the venting passage position.

17. Park release valve according to Claim 16, **characterized in that** the pressure passage position of the gate valve (104) is at the same time its venting shut-off position and/or **in that** the pressure shut-off position is at the same time the venting passage position.

18. Park release valve according to Claim 17, **characterized in that** the venting opening of the inner cylinder (62) faces a head space (74) between the control piston (69) and the inner cylinder (62), and **in that** the gate valve (104) has an at least partially reduced cross section at least close to the bore (66) which is provided as venting opening, for the formation of a space between the inner cylinder (62) and the gate valve (104).

19. Park release valve according to Claim 1 or one or more of the preceding claims, **characterized in that** the gate valve (104) is loaded in the direction of the pressure shut-off position by way of a restoring spring (109) .

20. Park release valve according to Claim 1 or one or more of the preceding claims, **characterized in that** the control slide (105) is arranged in a recess (113) in a bottom part (63), below the inner cylinder (62).

21. Park release valve according to Claim 1 or one or more of the preceding claims, **characterized in that** the gate valve (104) has a collar (107) at an end which faces the control slide (105), **in that** the collar (107) is arranged in a recess (113) in a bottom part (63), **in that** the recess (113) has a widened cross-sectional portion (114) for receiving the collar (107), **in that** the widened cross-sectional portion (114) has a connection to the supply pressure, and **in that** the collar (107) closes the connection to the supply pressure in the pressure shut-off position of the gate valve (104).

22. Park release valve according to Claim 21 or one or more of the preceding claims, **characterized in that** the gate valve (104) has a gate valve channel (112), for the connection from the recess (113) to a space between the gate valve (104) and the inner cylinder (62).

23. Park release valve according to Claim 22, **characterized in that** the control slide (105) has a control slide channel (118), for the connection from the gate valve channel (112) to the supply pressure.

24. Park release valve according to one or more of Claims 3 to 23, **characterized in that** a housing is provided at least in three pieces, namely with a main part, in which the cylinder (61) is configured, with a centre part, in which the inner cylinder (62) is configured, and with a bottom part (63) which has the connector for supply pressure (56) and a branch (101) into the inner cylinder (62).

25. Park release valve according to Claim 24, **characterized in that** a radially circumferential edge (67) of the centre part is held between the main part and the bottom part (63).

26. Park release valve according to Claim 1 or one or more of the preceding claims, **characterized in that** the connector as pressure outlet (55) can be connected indirectly or directly to spring brake cylinders (46, 47) .

27. Valve arrangement for a trailer vehicle, with a park release valve (23) according to one of the preceding claims and with a valve arrangement (37) as emergency brake valve, a connector as pressure outlet (55) of the park release valve (23) being connected to a control input (38) of the valve arrangement (37).

28. Valve arrangement according to Claim 27, **characterized in that** the valve arrangement (37) has a connector (40) as pressure outlet, a connector (39) for reservoir pressure (57) and a connector (41) for venting, and **in that**, depending on the switching position, the connector (40) for the pressure outlet can be connected to the connector (39) for reservoir pressure or to the connector (41) for venting.

29. Pneumatic brake system having a valve arrangement according to Claim 27 or 28 or having a park release valve according to one or more of Claims 1 to 26.

30. Trailer vehicle having a pneumatic brake system according to Claim 29.

## Revendications

1. Clapet (23) destiné à relâcher le frein de stationnement d'une remorque, comprenant une installation de frein pneumatique et comprenant les caractéristiques suivantes :
a) un piston de commande (69) et un coulisseau de piston (75),
b)
- un raccord pour la pression de réserve (56),
- un raccord pour la pression du récipient de réserve (57),
- une sortie de désaérage (73),
- un raccord en tant que sortie de pression (55),
c) le piston de commande (69) pouvant être déplacé au moins entre trois positions différentes les unes des autres :
- une position de relâchement, dans laquelle le raccord pour la pression du récipient de réserve (57) est connecté au raccord en tant que sortie de pression (55),
- une position de conduite dans laquelle le raccord pour la pression de réserve (56) est connecté au raccord en tant que sortie de pression (55) ou au raccord pour la pression du récipient de réserve (57) et au raccord en tant que sortie de pression (55),
- une position de stationnement dans laquelle le raccord en tant que sortie de pression (55) est connecté à la sortie de désaérage (73),
d) dans la position de conduite, le coulisseau de piston (75) est sollicité avec la pression de réserve (56) et presse contre le piston de commande (69), de telle sorte que le déplacement du piston de commande (69) soit limité et qu'il ne puisse pas adopter de position de relâchement,
**caractérisé par** un coulisseau de blocage (104) pouvant être déplacé au moins entre une position de blocage de pression et une position de passage de pression, une connexion du raccord pour la pression de réserve (56) au raccord en tant que sortie de pression (55) étant bloquée dans la position de blocage de pression, et de préférence avec un coulisseau de commande (105) pour solliciter le coulisseau de blocage (104) en fonction d'une pression de freinage s'appliquant au niveau d'un raccord pour la pression de freinage (119), de telle sorte que le coulisseau de commande (105) déplace le coulisseau de blocage (104) jusque dans la position de passage de pression et/ou l'y maintienne, lorsqu'une pression de freinage au-dessus d'une valeur limite s'applique au raccord pour la pression de freinage (119) .

2. Clapet (23) destiné à relâcher le frein de stationnement selon la revendication 1, **caractérisé en ce que** le piston de commande (69) et le coulisseau de piston (75) sont creux et sont disposés coaxialement l'un derrière l'autre sur un support commun, et sont déplaçables axialement.

3. Clapet (23) destiné à relâcher le frein de stationnement selon la revendication 1 ou 2 **caractérisé par** les caractéristiques suivantes :
a) dans un cylindre (61) est disposé un cylindre intérieur (62) qui forme ainsi un espace annulaire (68) entre le cylindre (61) et le cylindre intérieur (62),
b) le piston de commande (69) est réalisé sous forme creuse,
c) le piston de commande (69) peut être déplacé axialement sur le cylindre intérieur (62) et en même temps dans l'espace annulaire (68),
d) le coulisseau de piston (75) est réalisé à la manière d'une douille sous forme ouverte axialement des deux côtés, peut être déplacé axialement sur le cylindre intérieur (62) et sépare un espace de pression (76) de l'espace annulaire (68) d'un espace de désaérage (77) de l'espace annulaire (68),
e) le cylindre (61) présente, dans la région de l'espace de désaérage (77), une ouverture de désaérage (78),
f) l'espace de pression (76) est connecté au raccord pour la pression de réserve (56).

4. Clapet (23) destiné à relâcher le frein de stationnement selon la revendication 3, **caractérisé par** les caractéristiques suivantes :
a) le piston de commande (69) recouvre le cylindre intérieur (62) au moins en partie dans la direction axiale,
b) le piston de commande (69) présente trois joints d'étanchéité périphériques extérieurs (79, 80, 81) par rapport au cylindre (61), pour la formation de quatre zones extérieures, à savoir
- une première zone extérieure (82) en tant qu'espace de désaérage et comprenant l'ouverture de désaérage (78),
- une deuxième zone extérieure (83) qui peut être raccordée au raccord en tant que sortie de pression (55) en fonction de l'état du piston de commande (69),
- une troisième zone extérieure (84) en liaison avec le raccord pour la pression du récipient de réserve (57) et qui peut être raccordée au raccord en tant que sortie de pression (55) en fonction de l'état du piston de commande (69),
- et une quatrième zone extérieure (85) notamment sans pression,
c) le piston de commande (69) présente, au niveau d'un côté opposé au coulisseau de piston (75), dans la région d'un espace de tête (74), la sortie pour le désaérage (73),
d) le piston de commande (69) présente, dans la région de la deuxième zone extérieure (83), une ouverture (102) qui, en fonction de la position du piston de commande (69), débouche dans une première zone intérieure (90) reliée à l'espace de tête (74), ou dans une deuxième zone intérieure (91) adjacente à celle-ci,
e) dans la position de stationnement, l'ouverture (102) débouche dans la première zone intérieure (90) de telle sorte que l'on obtienne une liaison de la sortie pour le désaérage (73) par le biais de l'espace de tête (74), de la première zone intérieure (90) et de la deuxième zone extérieure (83) jusqu'au raccord en tant que sortie de pression (55).

5. Clapet (23) destiné à relâcher le frein de stationnement selon la revendication 4, **caractérisé par** les caractéristiques suivantes :
a) le cylindre intérieur (62) présente plusieurs joints d'étanchéité périphériques extérieurs (87, 88, 89) pour former plusieurs zones intérieures (90, 91, 92), le cylindre intérieur (62) étant pourvu, dans la région d'une deuxième zone intérieure (91), d'une ouverture (103) dans un espace intérieur (64),
b) le raccord pour la pression de réserve (56) est connecté à l'espace intérieur (64) du cylindre intérieur.

6. Clapet (23) destiné à relâcher le frein de stationnement selon la revendication 3 ou selon l'une ou plusieurs des revendications précédentes, **caractérisé en ce que** le coulisseau de piston (75) présente une plus grande section transversale fonctionnelle que le piston de commande (69), et **en ce qu'**à cet effet, notamment le cylindre (61) présente, dans la région du coulisseau de piston (75), une plus grande section transversale intérieure que dans la région du piston de commande (69).

7. Clapet (23) destiné à relâcher le frein de stationnement selon la revendication 1 ou selon l'une ou plusieurs des revendications précédentes, **caractérisé en ce que** le piston de commande (69) présente, dans la région d'une tête de piston, en particulier d'un côté frontal (70), la sortie pour le désaérage (73), et **en ce qu'**un organe d'actionnement se raccorde à la tête de piston, lequel présente un canal de désaérage (72) faisant partie de la sortie pour le désaérage (73).

8. Clapet (23) destiné à relâcher le frein de stationnement selon la revendication 3 ou selon l'une ou plusieurs des revendications précédentes, **caractérisé en ce que** le cylindre intérieur (62) présente, dans la région d'une paroi de tête, en particulier d'un côté frontal (65), un alésage axial (66) qui peut être fermé par un organe de fermeture.

9. Clapet (23) destiné à relâcher le frein de stationnement selon la revendication 5 ou selon l'une ou plusieurs des revendications précédentes, **caractérisé en ce que** dans la position de conduite, le piston de commande (69) est orienté de telle sorte que la pression s'appliquant au raccord pour la pression de réserve (56) parvienne à travers l'ouverture (103) dans le cylindre intérieur (62), la deuxième zone intérieure (91), l'ouverture (102) dans le piston de commande (69) et la deuxième zone extérieure (83) jusqu'au raccord en tant que sortie de pression (55).

10. Clapet (23) destiné à relâcher le frein de stationnement selon la revendication 5 ou l'une ou plusieurs des revendications précédentes, **caractérisé en ce que** dans la position de stationnement, le piston de commande (69) est orienté de telle sorte que le raccord en tant que sortie de pression (55) soit connecté par la deuxième zone extérieure (83), l'ouverture (102) dans le piston de commande (69), la première zone intérieure (90) et l'espace de tête (74), à un canal de désaérage (72) de la sortie pour le désaérage (79).

11. Clapet (23) destiné à relâcher le frein de stationnement selon la revendication 1 ou selon l'une quelconque ou plusieurs des revendications précédentes, **caractérisé en ce que** le raccord pour la pression de réserve (56) et le raccord pour la pression de récipient de réserve (57) sont connectés l'un à l'autre par le biais d'un clapet antiretour (60) de telle sorte qu'un écoulement d'air vers le raccord pour la pression de réserve (56) soit bloqué.

12. Clapet (23) destiné à relâcher le frein de stationnement selon la revendication 11, **caractérisé en ce que** le clapet antiretour (60) est intégré dans une paroi du cylindre.

13. Clapet (23) destiné à relâcher le frein de stationnement selon la revendication 3 ou selon l'une ou plusieurs des revendications précédentes, **caractérisé en ce que** le cylindre intérieur (62) présente, du côté du fond, un bord périphérique extérieur (67) et **en ce que** le bord (67) présente un premier canal (96) connecté à l'espace de pression (76) et un deuxième canal (97) conduisant indirectement au raccord pour la pression de récipient de réserve (57).

14. Clapet (23) destiné à relâcher le frein de stationnement selon la revendication 13, **caractérisé en ce qu'**un espace intérieur (64) du cylindre intérieur (62) est recouvert par une partie de fond (63), la partie de fond (63) s'étendant au moins en partie également sur le bord périphérique (67), et **en ce que** dans la partie de fond (63) est prévu un troisième canal (100) relié au raccord pour la pression de réserve (56), avec un branchement vers le premier canal (96), avec un branchement vers le deuxième canal (97) et avec un branchement vers l'espace intérieur (64) du cylindre intérieur (62).

15. Clapet (23) destiné à relâcher le frein de stationnement selon la revendication 14, **caractérisé en ce que** le bord périphérique (67) du cylindre intérieur (62) est retenu entre une paroi du cylindre (61) et la partie de fond (63).

16. Clapet destiné à relâcher le frein de stationnement selon la revendication 3, **caractérisé en ce que** le coulisseau de blocage (104) peut être déplacé axialement dans un cylindre intérieur (62), entre une position de blocage de désaérage et une position de passage de désaérage, **en ce que** le cylindre intérieur (62) présente un alésage (66) en tant qu'ouverture de désaérage, et **en ce que** le coulisseau de blocage (104), dans la position de blocage de désaérage, ferme l'alésage (66), et le maintien ouvert dans la position de passage de désaérage.

17. Clapet destiné à relâcher le frein de stationnement selon la revendication 16, **caractérisé en ce que** la position de passage de pression du coulisseau de blocage (104) est en même temps sa position de blocage de désaérage et/ou **en ce que** la position de blocage de pression est en même temps la position de passage de désaérage.

18. Clapet destiné à relâcher le frein de stationnement selon la revendication 17, **caractérisé en ce que** l'ouverture de désaérage du cylindre intérieur (62) est tournée vers un espace de tête (74) entre le piston de commande (69) et le cylindre intérieur (62), et **en ce que** le coulisseau de blocage (104) présente, au moins à proximité de l'alésage (66) prévu en tant qu'ouverture de désaérage, une section transversale au moins en partie réduite, pour former un espace entre le cylindre intérieur (62) et le coulisseau de blocage (104).

19. Clapet destiné à relâcher le frein de stationnement selon la revendication 1 ou selon l'une ou plusieurs des revendications précédentes, **caractérisé en ce que** le coulisseau de blocage (104) est sollicité par un ressort de rappel (109) dans la direction de la position de blocage de pression.

20. Clapet destiné à relâcher le frein de stationnement selon la revendication 1 ou selon l'une ou plusieurs des revendications précédentes, **caractérisé en ce que** le coulisseau de commande (105) est disposé dans un évidement (113) dans une partie de fond (63), en dessous du cylindre intérieur (62).

21. Clapet destiné à relâcher le frein de stationnement selon la revendication 1 ou selon l'une ou plusieurs des revendications précédentes, **caractérisé en ce que** le coulisseau de blocage (104) présente un collet (107) au niveau d'une extrémité tournée vers le coulisseau de commande (105), **en ce que** le collet (107) est disposé dans un évidement (113) dans une partie de fond (63), **en ce que** l'évidement (113) présente, pour recevoir le collet (107), un élargissement de section transversale (114), **en ce que** l'élargissement de section transversale (114) présente une liaison à la pression de réserve, et **en ce que** le collet (107), dans la position de blocage de pression du coulisseau de blocage (104), ferme la liaison à la pression de réserve.

22. Clapet destiné à relâcher le frein de stationnement selon la revendication 21 ou selon l'une ou plusieurs des revendications précédentes, **caractérisé en ce que** le coulisseau de blocage (104) présente un canal de coulisseau de blocage (112) pour la connexion de l'évidement (113) à un espace entre le coulisseau de blocage (104) et le cylindre intérieur (62).

23. Clapet destiné à relâcher le frein de stationnement selon la revendication 22, **caractérisé en ce que** le coulisseau de commande (105) présente un canal de coulisseau de commande (118) pour la connexion du canal de coulisseau de blocage (112) à la pression de réserve.

24. Clapet destiné à relâcher le frein de stationnement selon l'une ou plusieurs des revendications 3 à 23, **caractérisé en ce qu'**un boîtier est prévu en au moins trois parties, à savoir avec une partie principale dans laquelle est réalisé le cylindre (61), une partie centrale dans laquelle est réalisé le cylindre intérieur (62) et une partie de fond (63) qui présente le raccord pour la pression de réserve (56) et un branchement (101) dans le cylindre intérieur (62).

25. Clapet destiné à relâcher le frein de stationnement selon la revendication 24, **caractérisé en ce qu'**un bord radialement périphérique (67) de la partie centrale est fixé entre la partie principale et la partie de fond (63) .

26. Clapet destiné à relâcher le frein de stationnement selon la revendication 1 ou selon l'une ou plusieurs des revendications précédentes, **caractérisé en ce que** le raccord en tant que sortie de pression (55) peut être connecté de manière directe ou indirecte à des cylindres de frein d'accumulateur à ressort (46, 47).

27. Agencement de clapet pour une remorque, comprenant un clapet (23) destiné à relâcher le frein de stationnement selon l'une quelconque des revendications précédentes et un agencement de clapet (37) en tant que clapet de freinage d'urgence, un raccord en tant que sortie de pression (55) du clapet (23) destiné à relâcher le frein de stationnement étant connecté à une entrée de commande (38) de l'agencement de clapet (37).

28. Agencement de clapet selon la revendication 27, **caractérisé en ce que** l'agencement de clapet (37) présente un raccord (40) en tant que sortie de pression, un raccord (39) pour la pression du récipient de réserve (57) et un raccord (41) de désaérage pour le désaérage, et **en ce qu'**en fonction de la position de commutation, le raccord (40) pour la sortie de pression peut être connecté au raccord (39) pour la pression du récipient de réserve ou au raccord (41) de désaérage pour le désaérage.

29. Installation de frein pneumatique comprenant un agencement de clapet selon la revendication 27 ou 28 ou un clapet destiné à relâcher le frein de stationnement selon l'une quelconque ou plusieurs des revendications 1 à 26.

30. Remorque comprenant une installation de frein pneumatique selon la revendication 29.
